# EUROPEAN PATENT APPLICATION

(11) **EP 3 817 326 A1**
(43) Date of publication of application: **05.05.2021**
(21) Application number: 20203344.5
(22) Date of filing: 22.10.2020
(51) Int. Cl.: H04L 29/06, H04L 12/18, H04N 7/15, G06F 3/14

(54) **COMMUNICATION TERMINAL, COMMUNICATION SYSTEM, METHOD FOR SHARING DATA, AND CARRIER MEANS**

(30) Priority: 28.10.2019 JP 2019194952
(71) Applicant: Ricoh Company, Ltd., Tokyo 143-8555 (JP)
(72) Inventor: NAGAOKA, Kota, Tokyo, 143-8555 (JP); HINOHARA, Hiroshi, Tokyo, 143-8555 (JP); HOMMA, Takeshi, Tokyo, 143-8555 (JP); NAKAMURA, Shigeru, Tokyo, 143-8555 (JP); KAWASAKI, Yuichi, Tokyo, 143-8555 (JP); OGASAWARA, Masashi, Tokyo, 143-8555 (JP); SUGIOKA, Tatsuroh, Tokyo, 143-8555 (JP)
(74) Representative: SSM Sandmair

(57) **Abstract**

A communication terminal (1, 1b), includes a communication unit (105, 11, 11b), a display unit (180, 14, 14b), a transmitting unit (105, 11, 11b), and a receiving unit (105, 11, 11b). The communication unit (105, 11, 11b) communicates with a counterpart communication terminal (1, 1a) to share data with the counterpart communication terminal (1, 1a). The counterpart communication terminal (1, 1a) is input with first image data. The display unit (180, 14, 14b) displays, on a display (180), an image associated with second image data. The second image data is compressed data of the first image data. The transmitting unit (105, 11, 11b) transmits, to a server (6), a capture image acquisition request that is a request for a capture image corresponding to the image associated with the second image data and displayed by the display unit (180, 14, 14b). The server (6) manages shared data to be shared with the counterpart communication terminal (1, 1a). The receiving unit (105, 11, 11b) receives, from the server (6), capture image data of an image associated with the first image data. The capture image data is acquired by the counterpart communication terminal (1, 1a) in response to the capture image acquisition request.

## Description

### BACKGROUND

### Technical Field

Embodiments of the present disclosure relate to a communication terminal, a communication system, a method for sharing data and a carrier means.

### Related Art

Communication systems, in which communication between remote locations is available through a communication network such as the Internet, are now in widespread use. Examples of the communication systems include a conference system that performs a remote conference. In general, such a conference system allows communication terminals that are used by users who participate in a remote conference to share image data and voice data, which are stored or displayed on one communication terminal, by transmitting the image data to other communication terminal(s) through a communication network (JP-2011-254453-A). This enables to carry out a conference among remote locations, in a state close to an actual conference.

In addition, there is also a known method in which image data input to one communication terminal is captured by another communication terminal so that both communication terminals store the image data remotely communicated (JP-2017-526022-A).

However, in the conventional method, the image data input to the communication terminal, which is a sharing source, is transmitted as compressed data to the other communication terminal, which is a sharing destination. As a result, an image displayed on the communication terminal that is the sharing destination has a lower image quality than an image displayed on the communication terminal that is the sharing source. Accordingly, when the communication terminal that is the sharing destination captures the image displayed, the image quality of a capture image acquired by capturing is lower in image quality.

According to an embodiment of the disclosure, image quality of a capture image acquired with respect to image data that is transmitted from another communication terminal is improved.

### SUMMARY

An exemplary embodiment of the present disclosure includes a communication terminal (1, 1b), including a communication unit (105, 11, 11b), a display unit (180, 14, 14b), a transmitting unit (105, 11, 11b), and a receiving unit (105, 11, 11b). The communication unit (105, 11, 11b) communicates with a counterpart communication terminal (1, 1a) to share data with the counterpart communication terminal (1, 1a). The counterpart communication terminal (1, 1a) is input with first image data. The display unit (180, 14, 14b) displays, on a display (180), an image associated with second image data. The second image data is compressed data of the first image data. The transmitting unit (105, 11, 11b) transmits, to a server (6), a capture image acquisition request that is a request for a capture image corresponding to the image associated with the second image data and displayed by the display unit (180, 14, 14b). The server (6) manages shared data to be shared with the counterpart communication terminal (1, 1a). The receiving unit (105, 11, 11b) receives, from the server (6), capture image data of an image associated with the first image data. The capture image data is acquired by the counterpart communication terminal (1, 1a) in response to the capture image acquisition request.

According to an embodiment of the disclosure, image quality of a capture image acquired with respect to image data that is transmitted from the counterpart communication terminal is improved.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating an example of communication routes in a communication system, according to one of the embodiments;
FIG. 2 is an illustration for explaining an example of how an electronic whiteboard is used, according to one of the embodiments;
FIG. 3 is a block diagram illustrating an example of a hardware configuration of an electronic whiteboard, according to one of the embodiments;
FIG. 4 is a block diagram illustrating an example of a hardware configuration of a communication management device, a relay device, or an image storage device, according to one of the embodiments;
FIG. 5 is a diagram illustrating an example of a system configuration of a communication system, according to one of the embodiments;
FIG. 6, which includes FIG. 6A to FIG. 6C, is a block diagram illustrating an example of a functional configuration of a communication system, according to one of the embodiments;
FIG. 7 is a conceptual diagram illustrating for schematically explaining an example of shared data information, according to one of the embodiments;
FIG. 8A is a conceptual diagram illustrating an example of an authentication management table, according to one of the embodiments;
FIG. 8B is a conceptual diagram illustrating an example of a terminal management table, according to one of the embodiments;
FIG. 9A is a conceptual diagram illustrating an example of a destination list management table, according to one of the embodiments;
FIG. 9B is a conceptual diagram illustrating an example of a session management table, according to one of the embodiments;
FIG. 9C is a conceptual diagram illustrating an example of a relay device management table, according to one of the embodiments;
FIG. 10 is a conceptual diagram illustrating an example of a shared data management table, according to one of the embodiments;
FIG. 11 is a sequence diagram illustrating an example of a process of preparing for starting a remote communication between electronic whiteboards, according to one of the embodiments;
FIG. 12 is a diagram illustrating an example of a destination list screen displayed on an electronic whiteboard, according to one of the embodiments;
FIG. 13 is a sequence diagram illustrating an example of a process of starting a remote communication, according to one of the embodiments;
FIG. 14 is a sequence diagram illustrating an example of a process of sharing background image data and stroke data, between electronic whiteboards, according to one of the embodiments;
FIG. 15 is a sequence diagram illustrating an example of a process of sharing background image data and stroke data, between electronic whiteboards, according to one of the embodiments;
FIG. 16A is a diagram illustrating a display screen displayed on a first electronic whiteboard, according to one of the embodiments;
FIG. 16B is a diagram illustrating a display screen displayed on a second electronic whiteboard, according to one of the embodiments;
FIG. 17 is a sequence diagram illustrating an example of a process of acquiring a capture image in a communication system, according to one of the embodiments;
FIG. 18 is a diagram illustrating an example of a page that is shared between electronic whiteboards, according to one of the embodiments;
FIG. 19 is a flowchart illustrating an example of a process of selecting whether to capture an image, performed by an electronic whiteboard, according to one of the embodiments;
FIG. 20A is a diagram illustrating an example of a capture response selection image that is displayed on a first electronic whiteboard, according to one of the embodiments;
FIG. 20B is a diagram illustrating an example of a capture request rejection notification image that is displayed on a second electronic whiteboard, according to one of the embodiments;
FIG. 21A and FIG. 21B are diagrams illustrating examples of capture images for explaining editing of a capture image by a first electronic whiteboard, according to one of the embodiments;
FIG. 22 is a diagram illustrating an example of a display screen displayed on a second electronic whiteboard when a background image is shared between a plurality of electronic whiteboards, according to one of the embodiments;
FIG. 23 is a sequence diagram illustrating another example of a process of acquiring a capture image in a communication system, according to one of the embodiments; and
FIG. 24 is a diagram illustrating for explaining generating a page by a second electronic whiteboard, according to one of the embodiments.

The accompanying drawings are intended to depict example embodiments of the present disclosure and should not be interpreted to limit the scope thereof. The accompanying drawings are not to be considered as drawn to scale unless explicitly noted.

### DETAILED DESCRIPTION

The terminology used herein is for describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof. In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operation in a similar manner, and achieve a similar result.

Hereinafter, embodiments of the present disclosure are described with reference to the drawings. In the description of the drawings, the same elements are denoted by the same reference numerals, and redundant descriptions thereof are omitted.

### Overview of Communication System

### Communication Route

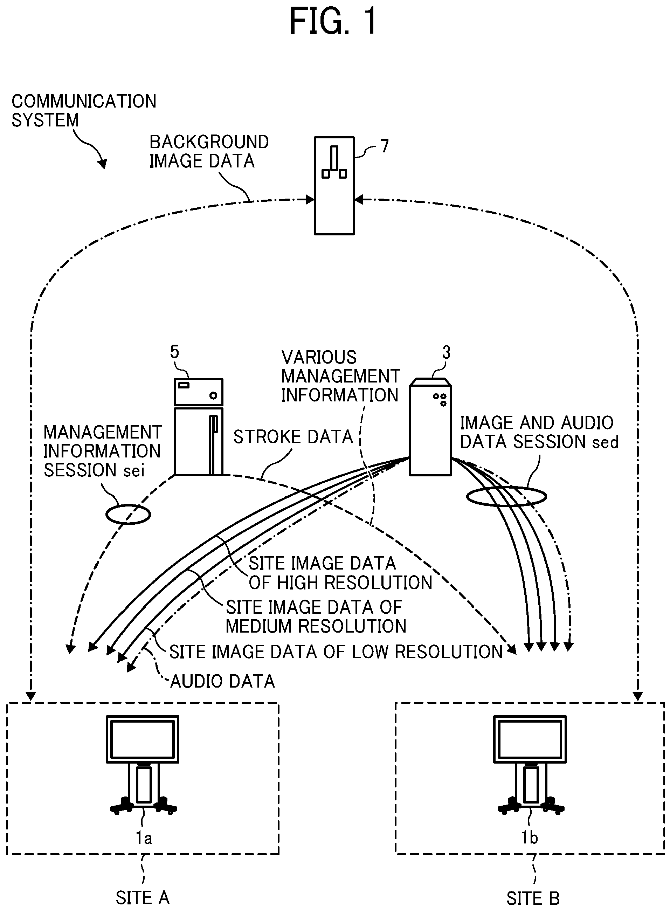

A communication system for conducting a videoconference between a plurality of electronic whiteboards including an electronic whiteboard 1a and an electronic whiteboard 1b, while images may be drawn on the electronic whiteboards is described with reference to FIG. 1. FIG. 1 is a schematic diagram illustrating an example of communication routes in a communication system, according to an embodiment. The "videoconference" may be referred to as a "teleconference" or a "remote conference", for example. The "videoconference", the "teleconference", or the "remote conference" is an example of a session in which image data or stroke data is shared between a plurality of terminals. For example, the session in which image data or stroke data is shared may be a session other than a conference, for example, such a session may be a remote lesson, an online seminar, a remote medical examination, an online meeting, a simple chat, or the like. In addition, the session in which image data or stroke data is shared may be used to present information in one direction.

The communication system includes a plurality of electronic whiteboards including the electronic whiteboard 1a and the electronic whiteboard 1b, a relay device 3, a communication management device 5, and an image storage device 7. The electronic whiteboard 1a and the electronic whiteboard 1b perform mutual communication of image data and audio data for calls and content data such as image data and stroke data for sharing. The stroke data is data necessary for reproducing a stroke image. The stroke data includes, but not limited to, coordinate data, line width data, line color data, vector data, etc. Each one of the electronic whiteboard 1a and the electronic whiteboard 1b transmits and receives image data and audio data for a call to and from a communication counterpart terminal, which is the other one of the electronic whiteboard 1a and the electronic whiteboard 1b, and reproduces an image and sound of a site where the communication counterpart terminal resides, thereby a remote video call is established. In the description, an image of a site where each of the plurality of electronic whiteboards such as the electronic whiteboard 1a or the electronic whiteboard 1b resides may be referred to as a "site image", hereinafter. Further, data for such site image may be referred to as "site image data".

Each of the electronic whiteboard 1a and the electronic whiteboard 1b transmits or receives image data of a background image to be shared, thereby allowing participants using the communication system to share the same background image. The background image is defined as an image displayed on a display of an electronic whiteboard 1. The background image includes, for example, a material image including an electronic file, such as meeting material, displayed on a display 180. The image data of the background image is transmitted and received in a file format such as, for example, Joint Photographic Experts Group (JPEG). Further, the electronic whiteboard 1a and the electronic whiteboard 1b exchange stroke data of a stroke image, thereby allowing the participants using the communication system to share the same stroke image. The stroke image is, for example, a line, which is made by a handwritten stroke, drawn by a user with an electronic pen or the like. The stroke image is displayed by stroke data representing points that indicate coordinates on the display.

Although in the present embodiment, the communication system includes the two electronic whiteboards, i.e., the electronic whiteboard 1a and the electronic whiteboard 1b, in another embodiment, the communication system may include three or more electronic whiteboards. In the description, the electronic whiteboard 1a and the electronic whiteboard 1b may be collectively referred to as an "electronic whiteboard 1" or "electronic whiteboards 1", to simplify the description, unless being necessary to be distinguished from one to another. The electronic whiteboard 1 is an example of a communication terminal that has a communication function, a drawing function, a display function, and the like. In another embodiment, the communication terminal may be, for example, a personal computer (PC), a smartphone, a tablet terminal, a smartwatch, a car navigation terminal, a game console, or a telepresence robot, on which an application program that supports the communication system is installed. In addition, the communication terminal may be a medical device in another embodiment. In an embodiment in which a medical device is used as the communication terminal, the background image may be an image including or related to a patient.

In FIG. 1, an electronic whiteboard having a videoconferencing function is illustrated as an example of each of the electronic whiteboard 1a and the electronic whiteboard 1b. A site image according to site image data may be either a moving (video) image or a still image.

In the description, an electronic whiteboard that is a source of a request for starting a videoconference is referred to as a "source terminal (start terminal)", and an electronic whiteboard that is a destination of the request (relay destination) is referred to as a "destination terminal". In the example of FIG. 1, the electronic whiteboard 1a is the source terminal and the electronic whiteboard 1b is the destination terminal. When the start of the videoconference is requested from the electronic whiteboard 1b, the electronic whiteboard 1b is the source terminal and the electronic whiteboard 1a is the destination terminal. Note that the electronic whiteboard 1a and the electronic whiteboard 1b may be used not only for communication between different sites or for communication between different rooms in the same office, but also for communication within the same room or for outdoor-indoor communication or outdoor-outdoor communication.

The relay device 3, which is implemented by one or more computers, performs a process of relaying content data for a call between the electronic whiteboard 1a and the electronic whiteboard 1b.

The communication management device 5 is implemented by one or more computers. The communication management device 5 centrally manages login authentication from the electronic whiteboard 1a and the electronic whiteboard 1b, the communication statuses of the electronic whiteboard 1a and the electronic whiteboard 1b, a destination list, the communication status of the relay device 3, and the like. Further, the communication management device 5 relays the stroke data to be shared between the electronic whiteboard 1a and the electronic whiteboard 1b.

The image storage device 7, which is implemented by one or more computers, stores image data uploaded from the electronic whiteboard 1a and representing a background image to be shared. Then the image data is downloaded to the electronic whiteboard 1b. The reverse is also performed. That is, the image storage device 7 stores image data uploaded from the electronic whiteboard 1b, and then the image data is downloaded to the electronic whiteboard 1a.

Each of the relay device 3, the communication management device 5, and the image storage device 7 may be configured as a single computer. Alternatively, the relay device 3, the communication management device 5, and the image storage device 7 may be configured by a plurality of computers by dividing each device into component units (functions or means) and arbitrarily allocating the component units to the plurality of computers. In the example embodiment, the communication management device 5 and the image storage device 7 are configured as a server 6 that manages data to be shared between the electronic whiteboard 1a and the electronic whiteboard 1b. In another embodiment, the server 6 may be configured as a single computer including the units (functions or means) of the communication management device 5 and the image storage device 7. In still another embodiment, the image storage device 7 may include a configuration of relaying the stroke data to be shared between the electronic whiteboard 1a and the electronic whiteboard 1b, instead of the communication management device 5.

As illustrated in FIG. 1, in the communication system, a management information session sei for exchanging various types of management information via the communication management device 5 is established between the electronic whiteboard 1a and the electronic whiteboard 1b. In addition, four sessions are established between the electronic whiteboard 1a and the electronic whiteboard 1b to exchange four types of data including site image data of high resolution, site image data of medium resolution, site image data of low resolution, and audio data, via the relay device 3. In FIG. 1, these four sessions are collectively illustrated as an image and audio data session sed. Note that the image and audio data session sed does not necessarily have to be four sessions and may have a smaller or larger number of sessions than the four sessions. In addition, a communication session may be established directly between the source terminal and the destination terminal without using the relay device 3. In addition, in the communication system, the communication management device 5 may have the functions of the relay device 3, and the image and audio data session sed between the electronic whiteboard 1a and the electronic whiteboard 1b may be established via the communication management device 5.

Further, in the communication system, stroke data is exchanged between the electronic whiteboard 1a and the electronic whiteboard 1b using the management information session sei.

The description is now given of resolution of an image of site image data, which is used in the present embodiment. For example, the site image data of low resolution has 160 pixels in a horizontal direction and 120 pixels in a vertical direction. Such site image data of the low resolution is to represent a base image. The site image data of medium resolution has, for example, 320 pixels in the horizontal direction and 240 pixels in the vertical direction. The site image data of high resolution has, for example, 640 pixels in the horizontal direction and 480 pixels in the vertical direction. In the case of a narrow band path, low-quality image data that only includes the site image data of low resolution, which is to represent a base image, is relayed. In the case of a relatively wide band path, intermediate-quality image data that includes the site image data of low resolution, which is to represent a base image, and the site image data of medium resolution is relayed. In the case of a very wide band path, high-quality image data that includes the site image data of low resolution, which is to represent a base image, the site image data of medium resolution, and the site image data of high resolution is relayed. Since audio data is relatively small in data size compared with the site image data, the audio data is relayed even in the case of a narrow band path.

### Use of Electronic Whiteboard

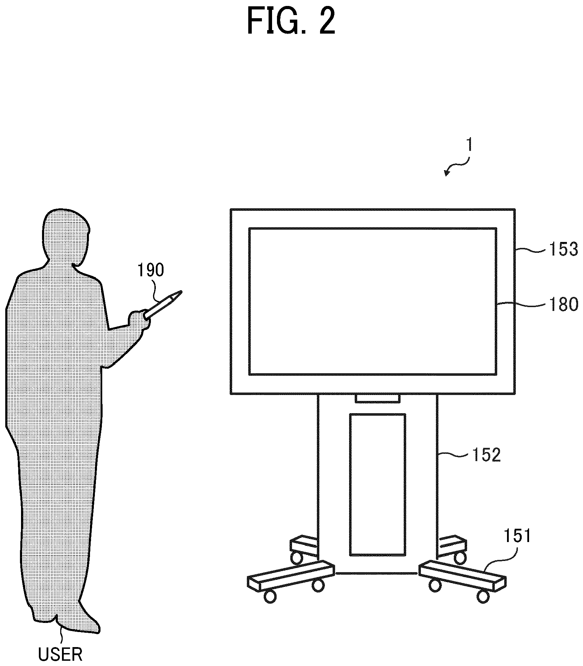

FIG. 2 is an illustration for explaining an example of how an electronic whiteboard is used, according to an embodiment of the present disclosure. As illustrated in FIG. 2, the electronic whiteboard 1 includes a plurality of legs 151 each having a plurality of casters on the lower side, a support 152 provided on the upper side of the legs 151, and a main body 153 (of the electronic whiteboard 1) provided on top of the support 152, and the display 180 provided on the front surface of the main body 153. The main body 153 includes a central processing unit (CPU) 101, which is described below. The user can input (draw) a stroke image such as a character on the display 180 using an electronic pen 190. The display 180 is an example of a display unit.

### Hardware Configuration

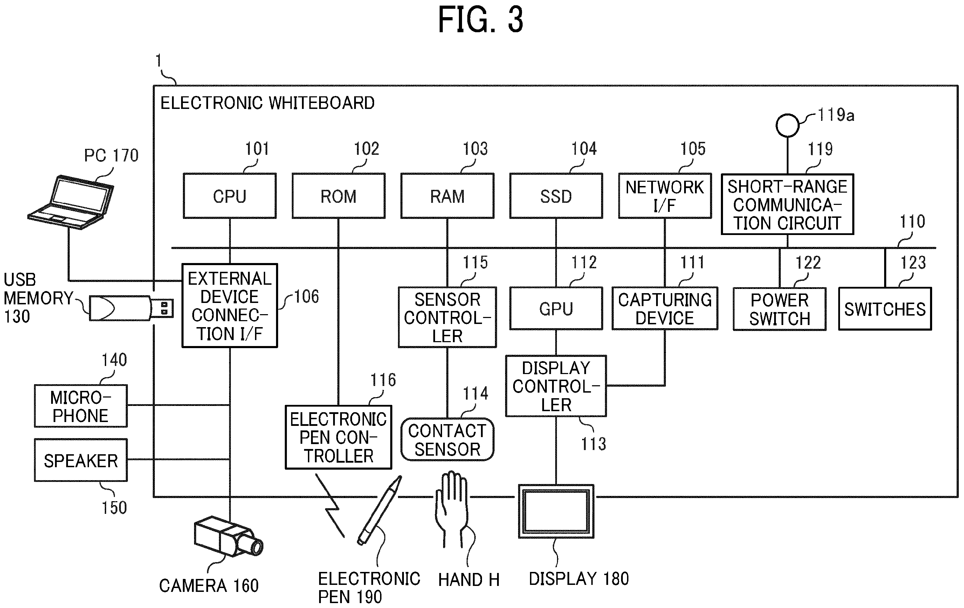

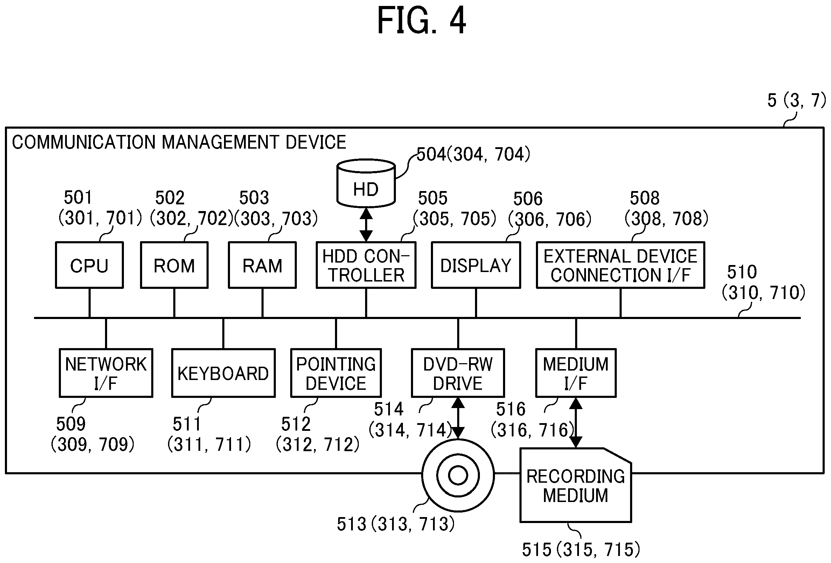

A description is now given of a hardware configuration of each device or terminal that configures the communication system with reference to FIG. 3 and FIG. 4. In each of the hardware configurations illustrated in FIG. 3 and FIG. 4, components or elements may be added or deleted as needed.

Hardware Configuration of Electronic Whiteboard FIG. 3 is a diagram of an example of the hardware configuration of the electronic whiteboard according to the present embodiment of the disclosure. As illustrated in FIG. 3, the electronic whiteboard 1 includes the CPU 101, a read only memory (ROM) 102, a random access memory (RAM) 103, a solid state drive (SSD) 104, a network interface (I/F) 105, and an external device connection I/F 106.

The CPU 101 controls the entire operation of the electronic whiteboard 1. The ROM 102 is a nonvolatile memory in which programs such as an initial program loader (IPL) used for booting the CPU 101 are stored. The RAM 103 is a volatile memory used as a work area for the CPU 101. The SSD 104 is a large-capacity storage device that stores various types of data such as a program for electronic whiteboard. The network I/F 105 is a communication interface for connecting to a communication network 100 through which the electronic whiteboard 1 performs communication. The external device connection I/F 106 is an interface for connecting to various external devices. In the example of FIG. 3, such external devices are a universal serial bus (USB) memory 130 and other external devices (a microphone 140, a speaker 150, and a camera 160).

The electronic whiteboard 1 further includes a capturing device 111, a graphics processing unit (GPU) 112, a display controller 113, a contact sensor 114, a sensor controller 115, an electronic pen controller 116, a short-range communication circuit 119, an antenna 119a of the short-range communication circuit 119, a power switch 122, and selection switches 123.

The capturing device 111 displays image data (image information) as a still image or a moving image on a display of a PC 170, which is external to the electronic whiteboard 1. The GPU 112 is a semiconductor chip (processor) dedicated to processing a graphical image. The display controller 113 controls and manages a screen display to output an image output from the GPU 112 to the display 180 or the like. The contact sensor 114 detects a contact with the display 180 by an electronic pen 190 or a user's hand H. The sensor controller 115 controls the operation of the contact sensor 114. The contact sensor 114 senses a touch input to a specific coordinate on the display 180 using the infrared blocking system. More specifically, the display 180 is provided with two light receiving elements disposed on both upper side ends of the display 180, and a reflector frame surrounding the sides of the display 180. The light receiving elements emit a plurality of infrared rays in parallel to a surface of the display 180. The light receiving elements receive lights passing in the direction that is the same as an optical path of the emitted infrared rays, which are reflected by the reflector frame. The contact sensor 114 outputs an identifier (ID) of the infrared ray that is blocked by an object after being emitted from the two light receiving elements, to the sensor controller 115. Based on the ID of the infrared ray, the sensor controller 115 detects a specific coordinate that is touched by the object. The electronic pen controller 116 communicates with the electronic pen 190 to detect a touch by the tip or bottom of the electronic pen 190 to the display 180. The short-range communication circuit 119 is a communication circuit that communicates in compliance with the near field communication (NFC), the Bluetooth (Registered Trademark), and the like. The power switch 122 turns on or off the power of the electronic whiteboard 1. The selection switches 123 are a group of switches for adjusting brightness, hue, etc., of display on the display 180, for example.

The electronic whiteboard 1 further includes a bus line 110. The bus line 110 is, for example, an address bus or a data bus, which electrically connects the elements, such as the CPU 101 illustrated in FIG. 3, each other.

The contact sensor 114 is not limited to the infrared blocking system type, which is described above, and may be a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object against the display. In addition to or in alternative to detecting a touch by the tip or bottom of the electronic pen 190, the electronic pen controller 116 may also detect a touch by another part of the electronic pen 190, such as a part held by a hand of the user.

### Hardware Configuration of Communication Management Device, Relay Device, and Image Storage Device

FIG. 4 is a block diagram illustrating an example of a hardware configuration of the communication management device 5, the relay device 3, or the image storage device 7, according to the present embodiment of the disclosure. A computer as an example of the communication management device 5 includes a CPU 501, a ROM 502, a RAM 503, a hard disk (HD) 504, a hard disk drive (HDD) controller 505, a display 506, an external device connection I/F 508, a network I/F 509, a keyboard 511, a pointing device 512, a digital versatile disc-rewritable (DVD-RW) drive 514, a medium I/F 516, and a bus line 510.

The CPU 501 controls the entire operation of the communication management device 5. The ROM 502 is a nonvolatile memory in which programs such as an IPL used for booting the CPU 501. The RAM 503 is a volatile memory used as a work area for the CPU 501. The HD 504 is a large-capacity storage device that stores various types of data such as a communication management program. The HDD controller 505 controls reading or writing of various data with respect to the HD 504 under control of the CPU 501. The display 506 displays various types of information such as a cursor, a menu, a window, characters, or an image. The external device connection I/F 508 is an interface for connecting to various external devices. The network I/F 509 is an interface for performing data communication using the communication network 100 such as the Internet. The keyboard 511 is one example of an input device provided with a plurality of keys for enabling a user to input characters, numerals, or various instructions. The pointing device 512 is another example of an input device for enabling a user to select or execute a specific instruction, select a target for processing, or move a cursor being displayed. The DVD-RW drive 514 controls reading or writing (storing) of data with respect to the DVD-RW 513. The DVD-RW 513 may be a digital versatile disc-recordable (DVD-R) or the like. The DVD-RW drive 514 may be a Blu-ray drive, such as a Blu-ray disk rewritable (BD-RE) (Registered Trademark), or a compact disc rewritable (CD-RW) drive, such as a CD-RW, which controls reading or writing (storing) of data with respect to a disk.

The medium I/F 516 controls reading or writing (storing) of data with respect to a recording medium 515 such as a flash memory. The bus line 510 is, for example, an address bus or a data bus, which electrically connects the elements, such as the CPU 501 illustrated in FIG. 4, each other.

In addition, the relay device 3 is implemented by a general-purpose computer and includes a CPU 301, a ROM 302, a RAM 303, an HD 304, an HDD controller 305, a display 306, an external device connection I/F 308, a network I/F 309, a keyboard 311, a pointing device 312, a DVD-RW drive 314,a medium I/F 316, and a bus line 310, as illustrated in FIG. 4. These elements of the relay device 3 has substantially the same configuration of the elements of the communication management device 5 including the CPU 501, the ROM 502, the RAM 503, the HD 504, the HDD controller 505, the display 506, the external device connection I/F 508, the network I/F 509, the keyboard 511, the pointing device 512, the DVD-RW drive 514, the medium I/F 516, and the bus line 510, and the redundant description is omitted here. The relay device 3, however, stores a relay control program in the HD 304 in alternative to the communication management program.

In addition, the image storage device 7 is implemented by a general-purpose computer and includes a CPU 701, a ROM 702, a RAM 703, an HD 704, an HDD controller 705, a display 706, an external device connection I/F 708, a network I/F 709, a keyboard 711, a pointing device 712, a DVD-RW drive 714, and a medium I/F 716, and a bus line 710, as illustrated in FIG. 4. These elements of the image storage device 7 has substantially the same configuration of the elements of the communication management device 5 including the CPU 501, the ROM 502, the RAM 503, the HD 504, the HDD controller 505, the display 506, the external device connection I/F 508, the network I/F 509, the keyboard 511, the pointing device 512, the DVD-RW drive 514, the medium I/F 516, and the bus line 510, and the redundant description is omitted here. The image storage device 7, however, stores an image storage program in the HD 704 in alternative to the communication management program.

Further, any one of the above-described programs may be recorded in a file in a format installable or executable on a computer-readable recording medium (storage medium) for distribution. Examples of the recording medium include, but not limited to, a compact disc-recordable (CD-R), a DVD, a Blu-ray disc, and a secure digital (SD) card. In addition, such recording medium may be provided as a program product to users within a certain country or outside of the country. The electronic whiteboard 1 implements, for example, a method for sharing data according to an aspect of the disclosure by executing a program according to an aspect of the disclosure.

### Overall Configuration of Communication System

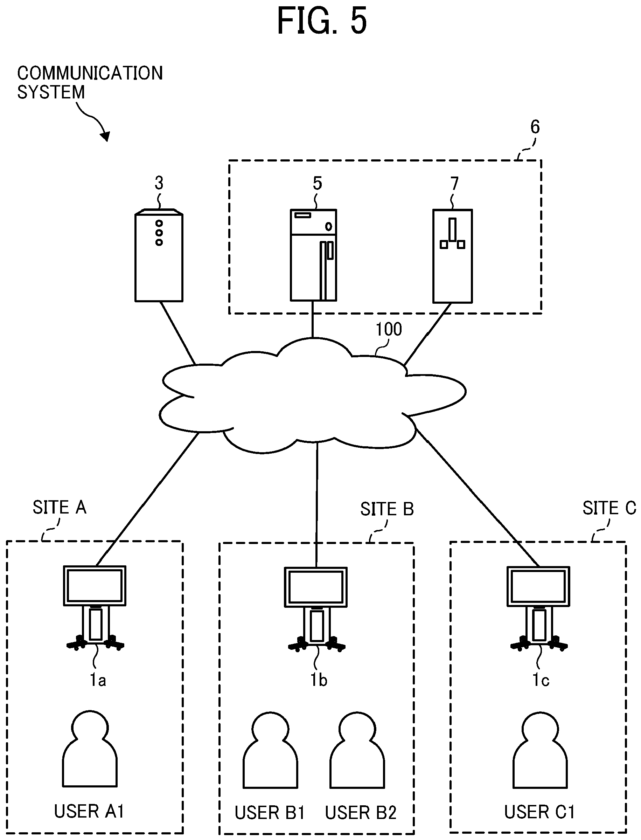

A description is now given of an overall configuration of the communication system according to an embodiment of the disclosure, with reference to FIG. 5. FIG. 5 is a diagram illustrating an example of a system configuration of the communication system according to the present embodiment.

In FIG. 5, the electronic whiteboard 1a is provided at a site A, the electronic whiteboard 1b is provided at a site B, and an electronic whiteboard 1c is provided at a site C. For example, the site A is a Tokyo office in Japan, the site B is a Beijing office in China, and the site C is a Washington D.C. office in the United States. A user A1 uses the electronic whiteboard 1a at the site A, users B1 and B2 use the electronic whiteboard 1b at the site B, and a user C1 uses the electronic whiteboard 1c at the site C.

The electronic whiteboard 1a, the electronic whiteboard 1b, the electronic whiteboard 1c, the relay device 3, the communication management device 5, and the image storage device 7 mutually communicate data through the communication network 100, such as the Internet or a local area network (LAN). The communication network 100 may not only include a wired network, but also a wireless network such as a network in compliance with Wi-Fi (registered trademark) or the like.

### Functional Configuration of Communication System

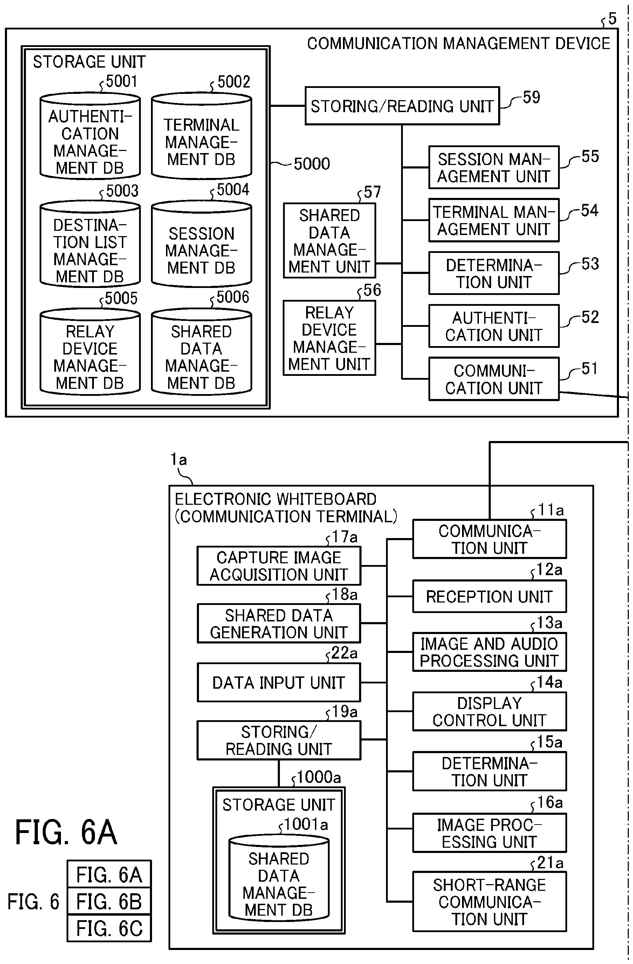

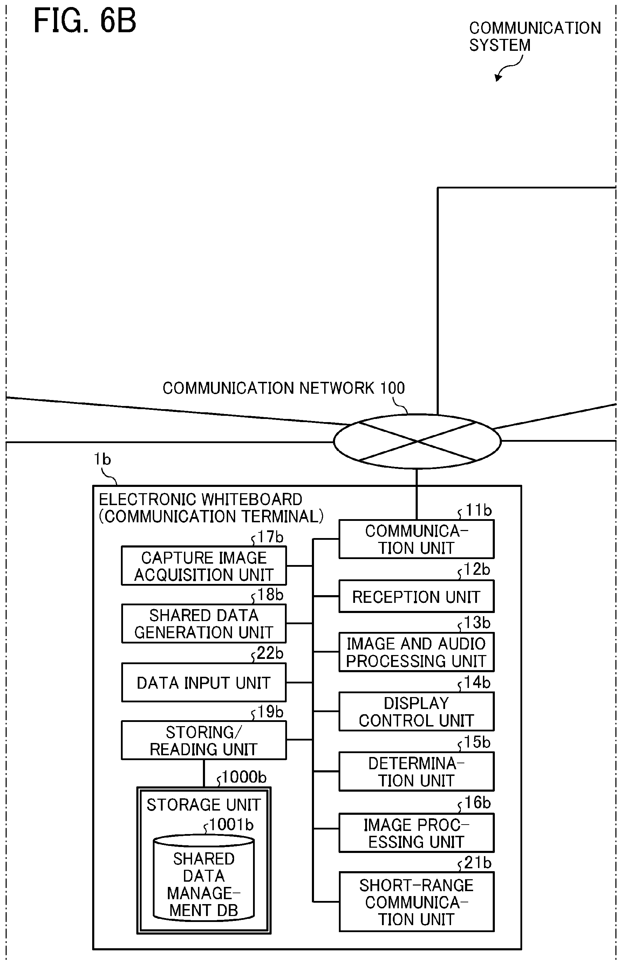

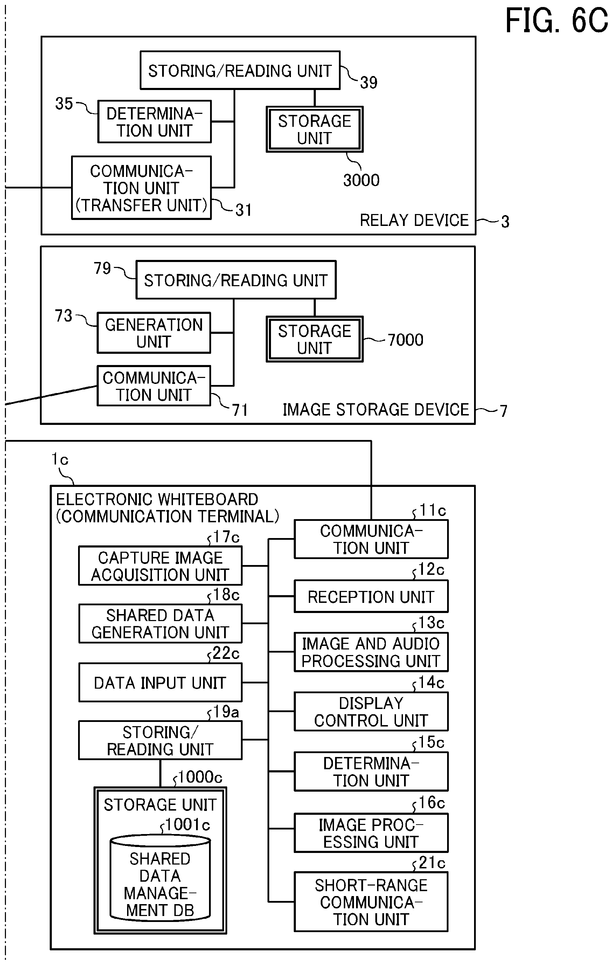

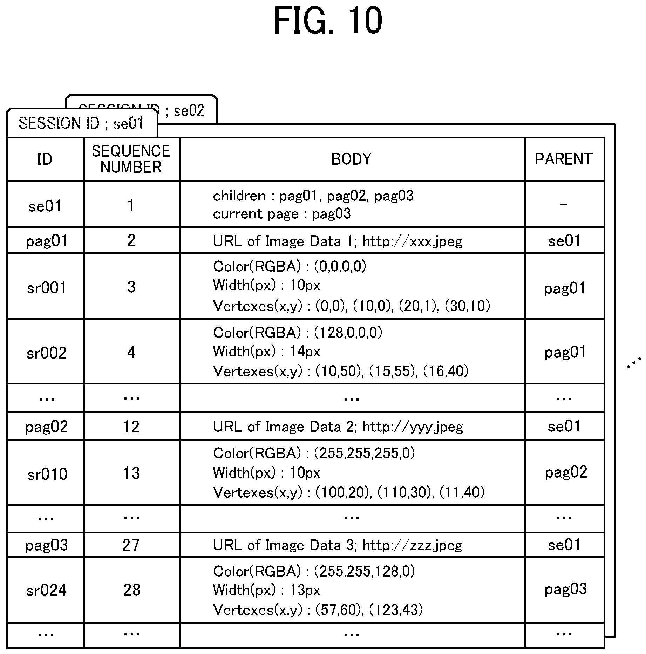

A description is now given of a functional configuration of the communication system according to the present embodiment of the disclosure, with reference to FIG. 6 (FIG. 6A to FIG. 6C) to FIG. 10. FIG. 6, which includes FIG. 6A to FIG. 6C, is a block diagram illustrating an example of the functional configuration of the communication system according to the present embodiment of the disclosure. In FIG. 6, which includes FIG. 6A to FIG. 6C, a terminal, a device, and a server that relate to processes or operation to be described below among the terminals, the devices, and the servers illustrated in FIG. 5.

### Functional Configuration of Electronic Whiteboard

First, a description is given of a functional configuration of each of the electronic whiteboards 1a, 1b, and 1c, according to an embodiment, with reference to FIG. 6A to FIG. 6C. Since each of the electronic whiteboards 1a, 1b, and 1c has the same functions, the functions of the electronic whiteboard 1 is described below. The electronic whiteboard 1 includes a communication unit 11, a reception unit 12, an image and audio processing unit 13, a display control unit 14, a determination unit 15, an image processing unit 16, a capture image acquisition unit 17, a shared data generation unit 18, and a short-range communication unit 21, a data input unit 22, and a storing/reading unit 19. These units are functions or means of functions that are implemented by or that are caused to function by operating any of the elements illustrated in FIG. 3 in cooperation with the instructions of the CPU 101 according to a control program expanded from the SSD 104 to the RAM 103. The electronic whiteboard 1 further includes a storage unit 1000, which is implemented by the RAM 103, the SSD 104, or the USB memory 130 illustrated in FIG. 3.

The communication unit 11 (a transmitting unit or a receiving unit), which is implemented by instructions of the CPU 101 illustrated in FIG. 3 and by the network I/F 105 illustrated in FIG. 3, transmits or receives various types of data (or information) to or from other terminal, device, apparatus, or system through the communication network 100. The communication unit 11 transmits or receives, for example, screen data to be shared with another electronic whiteboard 1, which is a counterpart communication terminal, via the communication management device 5. The communication unit 11 further controls processing to start a communication with another electronic whiteboard 1, which is a counterpart communication terminal. In addition, the communication unit 11 transmits, to the communication management device 5, a request for a capture image corresponding to a background image that is displayed on the display 180, for example. Hereinafter, the request for a capture image may be referred to as a capture image acquisition request. The communication unit 11 also receives, from the communication management device 5, capture image data of a background image displayed on another electronic whiteboard 1, which is a counterpart communication terminal.

The reception unit 12, which is implemented by instructions of the CPU 101 illustrated in FIG. 3, and by the contact sensor 114 and the electronic pen controller 116 illustrated in FIG. 3, receives various inputs performed by a user with the electronic pen 190 or the like. The reception unit 12 receives an input of a stroke, which is made by moving the electronic pen 190 or the like in contact with the display 180, for example. The reception unit 12 also receives selections performed on a selection screen displayed on the display 180, for example.

The image and audio processing unit 13, which is implemented by instructions of the CPU 101 illustrated in FIG. 3, performs main processing for the videoconferencing function. For example, the image and audio processing unit 13 performs digital processing such as encoding of site image data and audio data in accordance with the output signals of the microphone 140 and the output signals of the camera 160. The image and audio processing unit 13 further generates an image signal and an audio signal based on the site image data and the audio data received by the communication unit 11. The image and audio processing unit 13 further performs processing for combining site image data having different resolutions.

The display control unit 14, which is implemented by instructions of the CPU 101 illustrated in FIG. 3 and by the display controller 113 illustrated in FIG. 3, outputs image signals or the like to the display 180. Then, the display control unit 14 causes the display 180 to display a background image associated with the background image data input from an external device via the data input unit 22 or a background image data associated with the background image data transmitted from another electronic whiteboard 1. The determination unit 15, which is implemented by instructions of the CPU 101 illustrated in FIG. 3, performs various determinations.

The image processing unit 16, which is implemented by instructions of the CPU 101 illustrated in FIG. 3 and by the capturing device 111 illustrated in FIG. 3, performs main processing for a function as an electronic whiteboard. The image processing unit 16 generates stroke data and a stroke image based on a stroke, which is made by the electronic pen 190 or the like, received by the reception unit 12, for example. The image processing unit 16 also generates a stroke image based on the stroke data received by the communication unit 11, for example. Further, the image processing unit 16 performs data compression processing on the background image data input from the data input unit 22, for example. The image processing unit 16 also performs processing of editing a capture image acquired by the capture image acquisition unit 17, for example.

The capture image acquisition unit 17, which is implemented by instructions of the CPU 101 illustrated in FIG. 3, acquires a capture image of the background image displayed on the display 180. In the description of embodiments of the disclosure, capturing is defined as a process of storing content of a background image, such as a text, a still image, and a moving image, displayed on the display 180 in the electronic whiteboard 1 as an image, and a capture image is defined as an image that is acquired by the capturing.

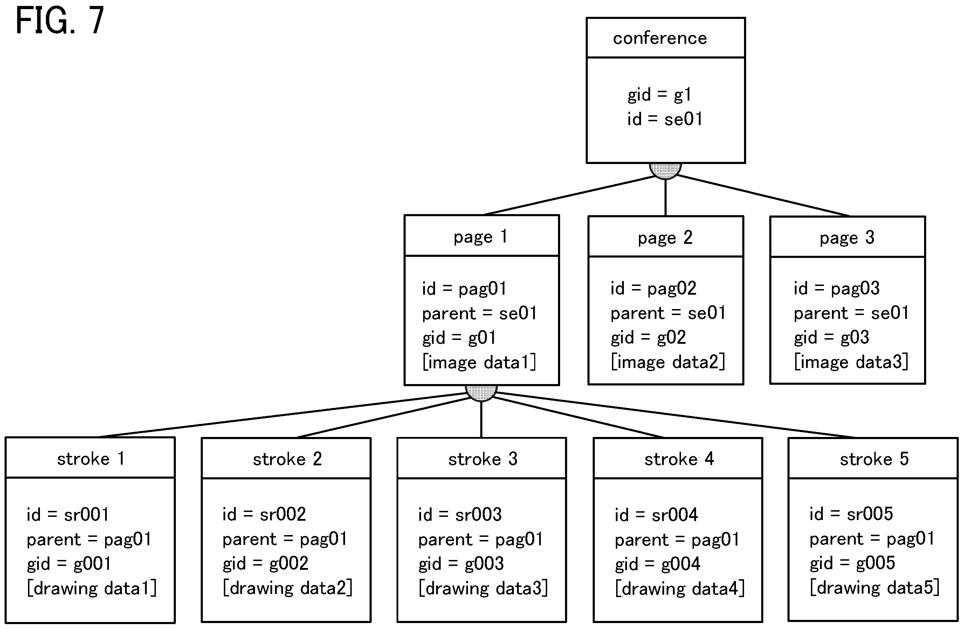

The shared data generation unit 18, which is implemented by instructions of the CPU 101 illustrated in FIG. 3, generates shared data as illustrated in FIG. 7, which is described later. In the description of embodiments of the disclosure, the shared data is defined as data that is shared and stored among the plurality of electronic whiteboards 1. The shared data includes the capture image data of a background image and the stroke data.

The short-range communication unit 21, which is implemented by instructions of the CPU 101 illustrated in FIG. 3 and by the short-range communication circuit 119 with the antenna 119a illustrated in FIG. 3, establishes, by short-range communications, a communication between terminals having short-range communication functions to provide or obtain data to or from each terminal such as an integrated circuit (IC) card or a smartphone.

The data input unit 22, which is implemented by instructions of the CPU 101 illustrated in FIG. 3 and by the external device connection I/F 106 illustrated in FIG. 3, receives data input from an external device such as the PC 170 or the USB memory 130. The data input unit 22 receives, for example, an input of image data (background image data) stored in an external device.

The storing/reading unit 19, which is implemented by instructions of the CPU 101 illustrated in FIG. 3, stores various types of data in the storage unit 1000, or reads various types of data from the storage unit 1000. Further, every time site image data and audio data are received in performing communication with other terminal, the storing/reading unit 19 overwrites the site image data and audio data stored in the storage unit 1000. The display 180 displays an image based on site image data before being overwritten, and the speaker 150 outputs sound based on audio data before being overwritten. Further, the stroke data corresponding to a stroke image drawn on the display 180 and the background image data corresponding to a background image displayed on the display 180 are stored in the storage unit 1000.

### Shared Data Information

FIG. 7 is a conceptual diagram illustrating for schematically explaining an example of shared data information, according to an embodiment of the disclosure. In FIG. 7, an example of a state of shared data that is stored in a shared data management database (DB) 1001 and being shared with another electronic whiteboard 1, which is a counterpart communication terminal is illustrated.

In the example of FIG. 7, a drawing screen has a hierarchical structure of "conference", "page (pages 1 to 3)", and "stroke (strokes 1 to 5)". "Stroke" is corresponding to the stroke data, according to the present embodiment, and is managed by each "page". In addition, "page" indicates a state in which image data associated with a screen for one page (one-page screen) (display screen) displayed on the display 180 is stored. In addition, "conference" indicates information on a conference being conducted by the electronic whiteboard 1. For example, information on a stroke 1 includes a stroke ID for identifying the stroke 1 (id=sr001), information for identifying page 1 in which the stroke 1 is included (parent=pag01), a global id (gid) of drawing data 1, "g001", and the drawing data 1. For example, when an operation such as a moving operation is performed on a stroke image represented by the stroke 1, the stroke ID (id=sr001) is inherited as it is, but the drawing data 1 and the gid "g001" of the drawing data 1 are updated. The drawing data 1 is drawing data for reproducing the stroke 1. The drawing data 1 includes, for example, coordinate data, line width data, line color data, and vector data.

Pages of the electronic whiteboard 1 are switchable with each other, and a "page" corresponds to each page of the electronic whiteboard 1. For example, information on a page 1 includes a page ID (id=pag01) for identifying the page 1, information (parent=se01) for identifying a "conference" conducted by the electronic whiteboard 1, a gid of a page (page data), "g01", and image data 1. The image data 1 is capture image data acquired by capturing a background image that configures the page 1. That is, the image data 1 represents the background image displayed as the page 1. Note that a page may not include image data. When a page does not include image data, the page does not have a background image (which means the page has a blank background).

"Conference" corresponds to a conference being conducted by the electronic whiteboard 1 and is managed by a conference ID for identifying the conference and a gid "g1" of the conference (conference information). When the electronic whiteboard 1 is performing a remote communication with another electronic whiteboard 1, which is a counterpart communication terminal, the conference ID corresponds to a session ID (id=se01) for identifying a session. For example, the image processing unit 16 of the electronic whiteboard 1 generates a stroke image drawn on the page 1, by using the drawing data 1 to 5 included respectively in the strokes 1 to 5. The gid (global id) indicated in each layer is assigned by the communication management device 5 when the data is shared with another electronic whiteboard 1, which is a counterpart communication terminal. The hierarchical structure of shared data illustrated in FIG. 7 is shared among the plurality of electronic whiteboards 1.

### Functional Configuration of Relay Device

A description is now given of a functional configuration of the relay device 3 according to the present embodiment, with reference to FIG. 6C. The relay device 3 includes a communication unit 31 that also serves as a transfer unit, a determination unit 35, and a storing/reading unit 39. These units are functions that are implemented by or that are caused to function by operating any of the elements illustrated in FIG. 4 in cooperation with the instructions of the CPU 501 according to the relay control program expanded from the HD 304 to the RAM 303. The relay device 3 further includes a storage unit 3000, which is implemented by the RAM 303, the HD 304 or the recording medium 315 illustrated in FIG. 4.

The communication unit 31, which is implemented by instructions of the CPU 301 illustrated in FIG. 4 and by the network I/F 309 illustrated in FIG. 4, transmits or receives various types of data (or information) to or from other terminal, device, apparatus, or system through the communication network 100. The communication unit 31 also functions as a transfer unit, and transfers site image data and audio data transmitted from one terminal to another terminal. The determination unit 35, which is implemented by instructions of the CPU 301 illustrated in FIG. 4, performs various determinations including, such as a determination related to a status of data delay.

The storing/reading unit 39, which is implemented by instructions of the CPU 301 illustrated in FIG. 4, stores various types of data in the storage unit 3000, or reads various types of data from the storage unit 3000.

### Functional Configuration of Communication Management Device

A description is now given of a functional configuration of the communication management device 5 according to the present embodiment, with reference to FIG. 6A. The communication management device 5 includes a communication unit 51, an authentication unit 52, a determination unit 53, a terminal management unit 54, a session management unit 55, a relay device management unit 56, a shared data management unit 57, and a storing/reading unit 59. These units are functions that are implemented by or that are caused to function by operating any of the elements illustrated in FIG. 4 in cooperation with the instructions of the CPU 501 according to the communication management program expanded from the HD 504 to the RAM 503. The communication management device 5 further includes a storage unit 5000, which is implemented by the RAM 503, the HD 504 or the recording medium 515 illustrated in FIG. 4.

The communication unit 51, which is implemented by instructions of the CPU 501 illustrated in FIG. 4 and by the network I/F 509 illustrated in FIG. 4, transmits or receives various types of data (or information) to or from other, device, apparatus, or system through the communication network 100. The communication unit 51 transmits or receives stroke data, which is transmitted from one of the electronic whiteboards 1, to or from another one of the electronic whiteboards 1.

The authentication unit 52, which is implemented by instructions of the CPU 501 illustrated in FIG. 4, authenticates a source of a login request (login request source). When the communication unit 51 receives login request information, the authentication unit 52 uses an authentication management DB 5001 to execute authentication processing for the login request source. The determination unit 53, which is implemented by instructions of the CPU 501 illustrated in FIG. 4, performs various determinations.

The terminal management unit 54, which is implemented by instructions of the CPU 501 illustrated in FIG. 4, manages various types of information on the electronic whiteboards 1 managed by a terminal management DB 5002 according to a status of each electronic whiteboard 1. The terminal management unit 54 updates information such as an operation status, a reception date and time, and an internet protocol (IP) address of a terminal in the terminal management DB 5002, for example. In addition, the terminal management unit 54 manages the destination list management DB 5003 and provides to the electronic whiteboard 1, in response to a request from the electronic whiteboard 1, destination list information including the terminal ID(s) of the destination terminal(s) managed in the destination list management DB 5003.

The session management unit 55, which is implemented by instructions of the CPU 501 illustrated in FIG. 4, manages a session established in the communication system. The session management unit 55 generates a session ID for identifying a session according to start request information requesting for starting of a communication from the electronic whiteboard 1, for example. The session management unit 55 further stores various information related to a session in the session management DB 5004 in association with the corresponding session ID and manages the various information, for example.

The relay device management unit 56, which is implemented by instructions of the CPU 501 illustrated in FIG. 4, selects one relay device 3 to be used for a session from a plurality of relay devices 3. The relay device management unit 56 manages a relay device management DB 5005 and selects one from the plurality of relay devices 3 by using various information on each relay device 3 stored in the relay device management DB 5005, for example. The relay device management unit 56 selects the relay device 3 that is located close to the source terminal based on the IP address of each relay device 3 stored in the relay device management DB 5005 and the IP address of the source terminal, for example. In addition, the relay device management unit 56 selects the relay device 3 based on a maximum data transfer rate of each relay device 3 stored in the relay device management DB 5005, for example. In the present embodiment, the method of selecting the relay device 3 used for relaying the session may be any method. In addition, the number of relay devices 3 included in the communication system may be one.

The shared data management unit 57, which is implemented by instructions of the CPU 501 illustrated in FIG. 4, manages various types of data associated with the shared data transmitted and received between the electronic whiteboards 1 (communication terminals). The shared data management unit 57 stores stroke data and capture image data of a background image transmitted through the session sei from the electronic whiteboard 1 participating in the session in a shared data management DB 5006 in association with the session ID and manages the stroke data and the capture image data, for example.

The storing/reading unit 59, which is implemented by instructions of the CPU 501 illustrated in FIG. 4, stores various data in the storage unit 5000, or reads various data from the storage unit 5000.

### Authentication Management Table

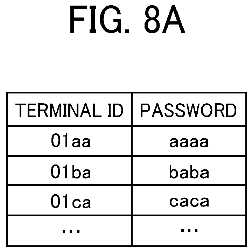

FIG. 8A is a conceptual diagram illustrating an example of an authentication management table, according to the present embodiment. The storage unit 5000 stores the authentication management DB 5001, which is configured by the authentication management table as illustrated in FIG. 8A. The authentication management table stores, for each one of the electronic whiteboards 1 managed by the communication management device 5, a terminal ID of the electronic whiteboard 1 and a password in association with each other. For example, the authentication management table illustrated in FIG. 8A indicates that the terminal ID of the electronic whiteboard 1a (communication terminal) is "Olaa" and the password of the electronic whiteboard 1a is "aaaa". The password is an example of authentication information. The authentication information also includes an access token.

### Terminal Management Table

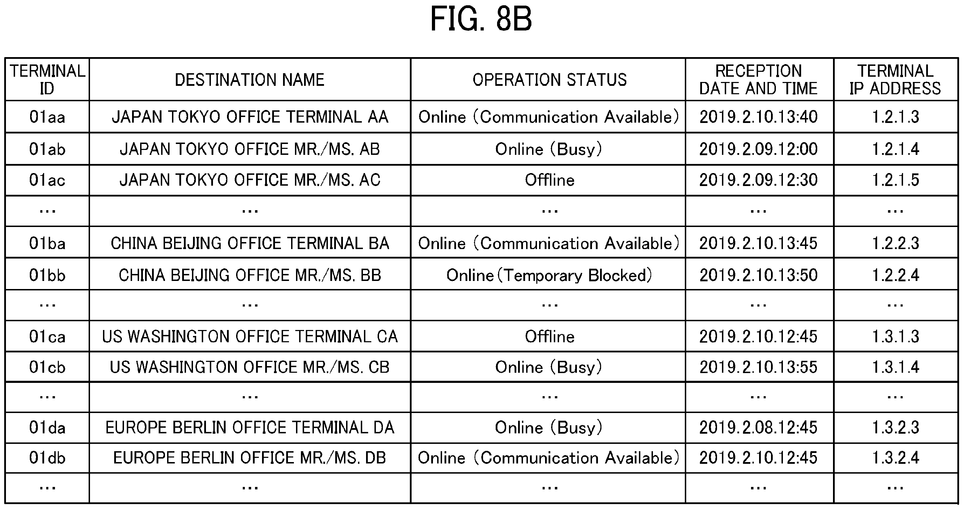

FIG. 8B is a conceptual diagram illustrating an example of a terminal management table, according to the present embodiment. The storage unit 5000 stores the terminal management DB 5002, which is configured by the terminal management table as illustrated in FIG. 8B. The terminal management table stores, for each one of the terminal IDs identifying the electronic whiteboards 1 (communication terminals), a destination name to be used when each electronic whiteboard 1 is a destination terminal, an operation status of each electronic whiteboard 1, reception date and time indicating when a login request described below is received by the communication management device 5, and an IP address of each electronic whiteboard 1 (communication terminal) in association with each other. For example, the terminal management table illustrated in FIG. 8B indicates that the electronic whiteboard 1a whose terminal ID is "Olaa" has the destination name "JAPAN TOKYO OFFICE TERMINAL AA", and the operation status of the electronic whiteboard 1a is "Online (Communication Available)". In addition, regarding the electronic whiteboard 1a having the terminal ID of "01aa", the terminal management table indicates that the date and time when the login request is received by the communication management device 5 is "13:40 on February 10, 2019" and that the IP address is "1.2.1.3". Note that such a terminal ID, a destination name, and a terminal IP address are stored when each electronic whiteboard 1 is pre-registered to receive services provided by the communication management device 5.

### Destination List Management Table

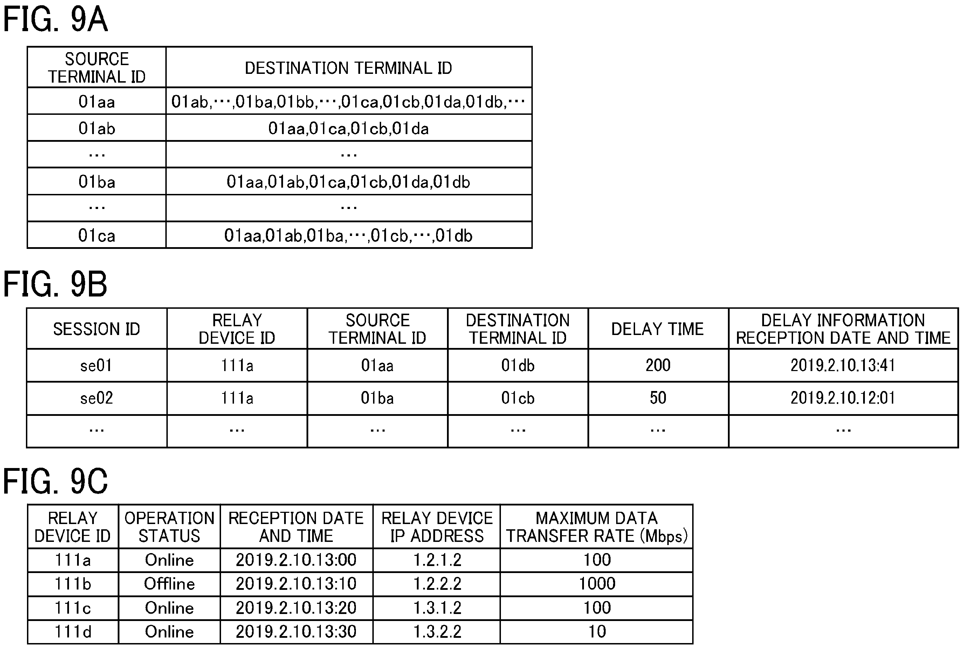

FIG. 9A is a conceptual diagram illustrating an example of a destination list management table, according to the present embodiment. The storage unit 5000 stores a destination list management DB 5003, which is configured by the destination list management table as illustrated in FIG. 9A. The destination list management table stores the terminal ID of each source terminal (electronic whiteboard 1), which requests for starting of a communication, in association with the terminal IDs of all destination terminals (electronic whiteboards 1) registered as destination candidates for each source terminal. For example, the destination list management table illustrated in FIG. 9A indicates that the destination terminal candidates to which the source terminal (electronic whiteboard 1a) whose terminal ID is "Olaa" may request for starting of a communication include the electronic whiteboard 1b whose terminal ID is "01ba". The information on such destination terminal candidates is updated by addition or deletion in response to an addition or deletion request transmitted from any source terminal to the communication management device 5.

A destination list is an example of destination information, and the destination information may be other than a list format. For example, information on each destination, such as a terminal ID, may be arranged one by one. In other words, the destination information may be managed in various ways other than the list format, as long as information on destination such as a terminal ID is obtainable.

### Session Management Table

FIG. 9B is a conceptual diagram illustrating an example of a session management table, according to the present embodiment. The storage unit 5000 stores a session management DB 5004, which is configured by the session management table as illustrated in FIG. 9B. The session management table stores, for each communication session ID for identifying a session to perform mutual communication between each electronic whiteboard 1 (communication terminal) and the relay device 3, a relay device ID of the relay device 3 involved in the session, a source terminal ID of the electronic whiteboard 1 (source terminal), a destination terminal ID of the electronic whiteboard 1 (destination terminal), a delay time (ms) in receiving site image data at the destination terminal, and delay information reception date and time indicating when delay information indicating that the delay time is transmitted from the destination terminal and received by the communication management device 5, in association with each other. For example, the management table illustrated in FIG. 9B indicates that, in a communication session executed using the session ID "se01", the relay device with the relay device ID "111a" relayed video data and audio data between the electronic whiteboard 1 with the terminal ID "Olaa" and the electronic whiteboard 1 with the terminal ID "01db", and in the electronic whiteboard 1 (destination terminal), the delay time of the video data at "13:41 on February 10, 2019" was 200ms.

### Relay Device Management Table

FIG. 9C is a conceptual diagram illustrating an example of a relay device management table, according to the present embodiment. The storage unit 5000 stores a relay device management DB 5005, which is configured by the relay device management table as illustrated in FIG. 9C. The relay device management table stores, for each one of the relay devices 3, the relay device ID, the operation status of the relay device 3, the date and time when the communication management device 5 received status information indicating the operation status, an IP address of the relay device 3, and maximum data transfer rate (Mbps) of the relay device 3, in association with each other. For example, the relay device management table illustrated in FIG. 9C indicates that the relay device 3 with the relay device ID "111a" has an operation status "Online", that the date and time when the communication management device 5 received the operation status is "13:30 on February 10, 2019", that the IP address of the relay device 3 is "1.2.1.2", and that the maximum data transmission speed in the relay device 3 is 100Mbps.

### Shared Data Management Table

FIG. 10 is a conceptual diagram illustrating an example of a shared data management table, according to the present embodiment. The storage unit 5000 stores the shared data management DB 5006, which is configured by the shared data management table as illustrated in FIG. 10. The shared data management table stores, for each session ID identifying a session to perform mutual communication between each electronic whiteboard 1 (communication terminal) and the relay device 3, various types of data related to the shared data, which is shared by and stored in the plurality of electronic whiteboards 1. The data indicated by the shared data management table corresponds to a state of the shared data stored in the shared data management DB 1001 (see FIG. 7) of each electronic whiteboard 1.

The data indicated by the shared data management table includes a data ID for identifying a data record (piece of data), a sequence number indicating a data record-generation order, information (body) indicating content of the data record, and information for identifying parent data. For example, in a case of a data record of conference data, which indicates a remote conference being conducted with the plurality of electronic whiteboards 1, the shared data management table includes a conference ID (session ID) for identifying the conference being executed, information (children) on pages generated for the conference, and information (current page) on a page configuring a display screen being currently displayed on the electronic whiteboard 1. In addition, the shared data management table includes, as a data record of page data, a page ID for identifying the page (page data) and a uniform resource locator (URL) indicating a storage location of background image data configuring the page, for example.

In addition, the shared data management table includes, as a data record of stroke data, a stroke ID for identifying the stroke data generated by a "stroke drawing" event, information (body) indicating the content of the stroke data, and information (parent) for identifying a parent page (page data), for example. In the present embodiment described above, the information (body) indicating the content of the stroke data includes a color of a corresponding drawn stroke, a width indicating a width of a line of the corresponding drawn stroke, and vertexes (x, y) of the corresponding drawn stroke.

In the present embodiment, "stroke drawing" is a user input operation that is an event in which a user uses the electronic pen 190 to presses against (have a contact with) the display 180 and moves the electronic pen 190 in contact with the surface of the display 180. The event ends when the electronic pen 190 is separated from the surface of the display 180 by the user. The color of each stroke is represented in a data format of Red Green Blue Alpha (RGBA), and each element is represented by a numerical value of 0 to 255. Further, the width of each line of each drawn stroke is represented by the number of pixels. The vertexes of each drawn stroke are represented by X-Y coordinates. A Bezier curve obtained from the vertices forms a line segment indicating the stroke. With the shared data management table described above, the communication management device 5 manages various types of data, including the stroke data, related to a display screen generated for a videoconference executed using a specific communication session.

### Functional Configuration of Image Storage Device

A description is now given of a functional configuration of the image storage device 7 according to the present embodiment, with reference to FIG. 6C. The image storage device 7 includes a communication unit 71, a generation unit 73, and a storing/reading unit 79. These units are functions that are implemented by or that are caused to function by operating any of the elements illustrated in FIG. 4 in cooperation with instructions of the CPU 701 according to the image storage program expanded from the HD 704 to the RAM 703. The image storage device 7 further includes a storage unit 7000, which is implemented by the RAM 703, the HD 704 or the recording medium 715 illustrated in FIG. 4.

The communication unit 71, which is implemented by instructions of the CPU 701 illustrated in FIG. 4 and by the network I/F 709 illustrated in FIG. 4, transmits or receives various types of data (or information) to or from other, device, apparatus, or system through the communication network 100. The generation unit 73, which is implemented by instructions of the CPU 701 illustrated in FIG. 4, generates a URL indicating a storage location of background image data. The storing/reading unit 79, which is implemented by instructions of the CPU 701 illustrated in FIG. 4, stores various types of data in the storage unit 7000, or reads various types of data from the storage unit 7000.

### Processes or Operation

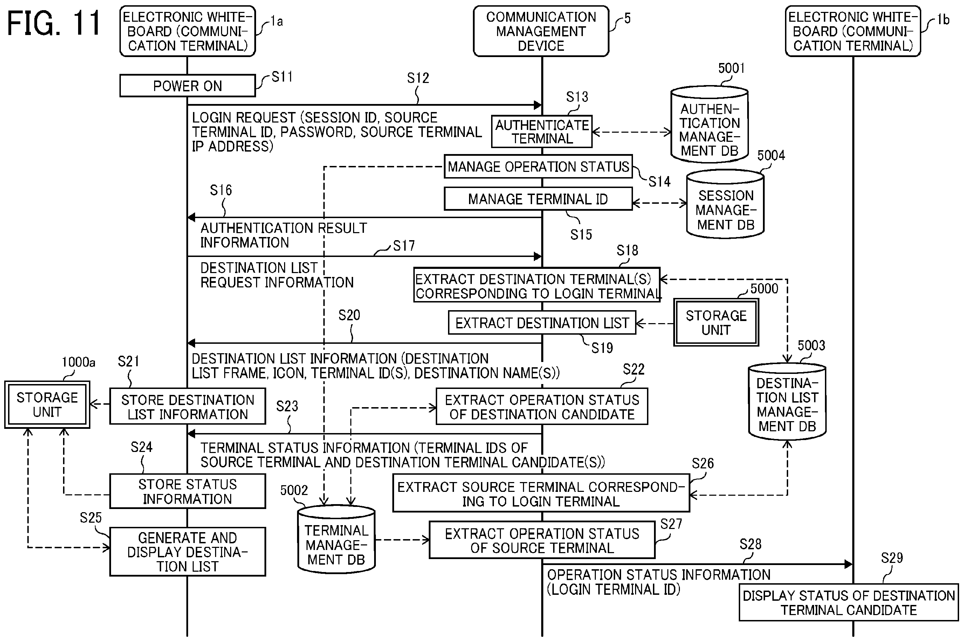

A description is now given of processes or operation performed by the communication system according to an embodiment of the present disclosure, with reference to FIG. 11 to FIG. 25.

### Process at Preparation Stage for Remote Communication

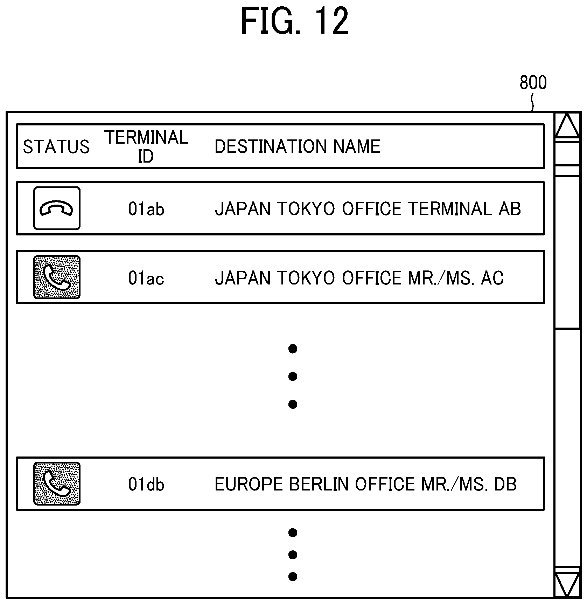

First, a description is given of a process of preparing for a remote communication, performed by the electronic whiteboard 1a as a login request source terminal, with reference to FIG. 11 and FIG. 12. FIG. 11 is a sequence diagram illustrating a process at a preparation stage for starting a remote communication between the electronic whiteboards 1 according to the present embodiment. FIG. 12 is a diagram illustrating an example of a destination list screen displayed on the electronic whiteboard 1 according to the present embodiment. Note that the login process or a sharing process performed by the electronic whiteboard 1b is substantially the same as the process performed by the electronic whiteboard 1a, and thus the description thereof is omitted.

In step S11, when the power switch 122 of the electronic whiteboard 1a is turned on, the reception unit 12a accepts a request to turn on the power of the electronic whiteboard 1a.

In step S12, the communication unit 11a transmits login request information indicating a request for login authentication to the communication management device 5 through the communication network 100. The login request information includes the terminal ID and the password of the electronic whiteboard 1a. The terminal ID and the password are data read from the storage unit 1000a by the storing/reading unit 19a and transmitted to the communication unit 11a. Note that the terminal ID and the password are not limited to the above. In another example, a terminal ID and/or a password input by the user using an input device (input means) such as a keyboard may be transmitted. In still another example, a terminal ID and/or a password read from a recording medium such as a subscriber identity module (SIM) card or an SD memory card connected to the electronic whiteboard 1a may be transmitted. Thereby, the communication unit 51 of the communication management device 5 receives the login request information transmitted from the electronic whiteboard 1a.

Next, the authentication unit 52 of the communication management device 5 searches the above-described authentication management table (see FIG. 8A) by using the communication ID and the password included in the login request information received via the communication unit 51, as search keys. In step S13, the authentication unit 52 allows the electronic whiteboard 1a to log in, when a combination of the terminal ID and the password included in the login request information is managed in the authentication management table. When the combination of the terminal ID and the password included in the login request information is managed in the authentication management table, the processing of step S14 and the subsequent steps is to be performed.

When the login of the electronic whiteboard 1a is accepted, the terminal management unit 54 updates the information corresponding to the terminal ID "Olaa" of the electronic whiteboard 1a in the terminal management table (see FIG. 8B). For example, the terminal management unit 54 changes the information on the "operation status" corresponding to the terminal ID "Olaa" to "Online (Communication Available)", and updates the information on the "reception date and time" to a date and time when the login request information is received (step S14). In another example, the IP address of the communication terminal (electronic whiteboard 1) may not be registered in advance, but the IP address transmitted from the electronic whiteboard 1a in step S12 may be used. Thereby, in the terminal management table, the terminal ID "01aa", the operation status "Online (Communication Available)", the reception date and time "2019.2.10.13:40", and the IP address "1.2.1.3" are stored in association with each other, as illustrated in FIG. 8B.

In step S15, the session management unit 55 adds, to the session management table (see FIG. 9B), a new record that has the terminal ID of the electronic whiteboard 1a, "01aa", received in step S12 as a "source terminal ID", and then manage the record. In step S16, the communication unit 51 transmits authentication result information indicating an authentication result obtained in step S13 to the electronic whiteboard 1a that has requested for the login through the communication network 100.

In step 17, when receiving the authentication result information indicating that the login is accepted, the communication unit 11a of the electronic whiteboard 1a (login request source terminal) transmits, to the communication management device 5, destination list request information to request for a destination list, through the communication network 100. Thereby, the communication unit 51 of the communication management device 5 receives the destination list request information.

Subsequently, the terminal management unit 54 searches the destination list management table (see FIG. 9A) using the terminal ID "Olaa" of the electronic whiteboard 1a (login request source terminal) as a search key, and reads the terminal ID(s) of the destination terminal candidate(s) that is (are) available to communicate with the electronic whiteboard 1a. In addition, in step S18, the terminal management unit 54 reads the destination name(s) corresponding to the terminal ID(s) of the destination terminal candidate(s) from the terminal management table (FIG. 8B). In the present embodiment, each terminal ID and the corresponding destination name of the destination terminal candidates associated with (corresponding to) the terminal ID "Olaa" of the login request source terminal (electronic whiteboard 1a) is extracted.

In step S19, the communication unit 51 reads, for example, data representing a destination list frame and data representing an icon indicating an operation status from the storage unit 5000 via the storing/reading unit 59. In step S20, the communication unit 51 transmits, to the electronic whiteboard 1a, "destination list information (destination list frame, icon, terminal ID, destination name)" including the data of destination list frames, the data of icons, and the data of the terminal IDs and the destination names, which is read in S18. Accordingly, the communication unit 11a of the electronic whiteboard 1a receives the destination list information. In step S21, the storing/reading unit 19a stores the destination list information in the storage unit 1000a.

As described above, in the present embodiment, the communication management device 5 centrally manages the destination list information of all terminals, instead of that each terminal manages the destination list information. Accordingly, for example, when a new electronic whiteboard 1 is added to the communication system, when a terminal already included in the communication system is replaced with a new model, or when appearance of the destination list frame is to be changed, the communication management device 5 according to the present embodiment centrally manages all destination terminal candidates, resulting in saving time and efforts for changing the destination list information by each terminal.

Further, the terminal management unit 54 searches the terminal management table (see FIG. 8B) using the terminal ID(s) of the destination candidate(s) extracted in step S18 as a search key, and reads a corresponding operation status, for each terminal ID of the destination candidate. Thereby, the terminal management unit 54 acquires the operation status of the electronic whiteboard 1 corresponding to the terminal ID of each of the destination candidates (step S22).

In step S23, the communication unit 51 transmits "terminal status information (status information)" including the terminal IDs, which are used as the search keys in step S22, and the operation statuses of the corresponding destination terminals through the communication network 100 to the electronic whiteboard 1a.

In step S24, the storing/reading unit 19a of the electronic whiteboard 1a stores the terminal status information received from the communication management device 5 in the storage unit 1000a. As a result, the electronic whiteboard 1a acquires the current operation statuses of the destination terminal candidates including the electronic whiteboard 1b, which is currently available to communicate with the electronic whiteboard 1a.

Subsequently, the display control unit 14a generates a destination list that reflects the statuses of the terminals as destination candidates based on the destination list information and the terminal status information, which are stored in the storage unit 1000a. In step S25, the display control unit 14a further causes the display 180 of the electronic whiteboard 1a to display a destination list screen 800 as illustrated in FIG. 12 using the generated destination list. On the destination list screen 800, an icon indicating an operation status, a terminal ID, and a destination name are displayed for each corresponding destination candidate. In the example of FIG. 12, the icons, each of which representing an operation status of the corresponding terminal, are displayed, and the icons indicates, from the top of the screen, "Offline", "Online (Communication Available)", ... and, ....

In step S26, the terminal management unit 54 of the communication management device 5 searches the destination list management table (see FIG. 9A) based on the terminal ID "Olaa" of the electronic whiteboard 1a and extracts the terminal ID(s) of other terminal(s) that is(are) registered in association with the electronic whiteboard 1a as a destination candidate. In the destination list management table illustrated in FIG. 9A, the terminal IDs of other terminals to be read includes "01ab", "01ba", and "01ca".

In step S27, the terminal management unit 54 searches the terminal management table (see FIG. 8B) based on the terminal ID "Olaa" of the electronic whiteboard 1a, to acquire the operation status of the electronic whiteboard 1a.

In step S28, the communication unit 51 transmits "terminal status information" including the terminal ID "01aa" and the operation status "Online" of the electronic whiteboard 1a acquired in step S27, to the terminal(s) whose operation status(es) is(are) "Online" in the terminal management table (FIG. 8B) among the terminals identified by the terminal IDs extracted in step S26. When the communication unit 51 transmits the terminal status information to the electronic whiteboard 1b, the IP address of each electronic whiteboard 1 stored in the terminal management table (FIG. 8B) is referred based on each terminal ID. Thereby, the terminal ID "Olaa" and the operation status "Online" of the electronic whiteboard 1a are transmitted to each of the other destination terminals that are available to communicate with the electronic whiteboard 1a as the destination candidates. Accordingly, in step S29, the destination candidate (such as the electronic whiteboard 1b) also displays the operation status of the destination terminal candidate, which is a destination candidate from a view of the destination candidate of the electronic whiteboard 1a (the login source terminal).

### Process of Starting Remote Communication

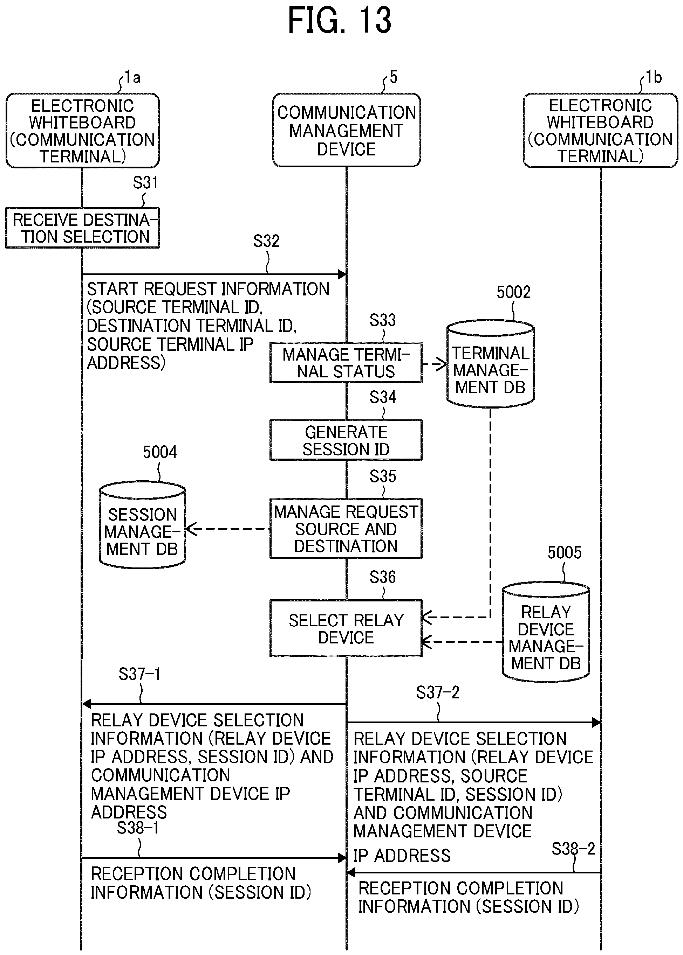

A description is now given of a process in which the electronic whiteboard 1a starts a remote communication with the electronic whiteboard 1b, with reference to FIG. 13. FIG. 13 is a sequence diagram illustrating an example of a process of starting a remote communication, according to an embodiment of the present disclosure.

In step S31, when the user A1 of a source terminal (electronic whiteboard 1a) selects the electronic whiteboard 1b by selecting a destination candidate (terminal ID "01ba") from the destination candidates as illustrated in FIG. 12, the reception unit 12a receives a request for starting of a call (communication) with the selected destination terminal (electronic whiteboard 1b). The source terminal is a source of a request for starting of a communication. In step S32, the communication unit 11a of the source terminal (electronic whiteboard 1a) transmits start request information indicating a request for starting of a communication to the communication management device 5. The start request information includes the terminal ID "Olaa" of the source terminal (electronic whiteboard 1a) and the terminal ID "Olba" of the destination terminal (electronic whiteboard 1b). Accordingly, the communication unit 51 of the communication management device 5 receives the start request information and the IP address of the source terminal (electronic whiteboard 1a), which is a transmission source of the start request information.

Then, the terminal management unit 54 updates the terminal management table (see FIG. 8B) based on the terminal ID "Olaa" of the source terminal (electronic whiteboard 1a) and the terminal ID "Olba" of the destination terminal (electronic whiteboard 1b), which are included in the start request information. For example, the terminal management unit 54 updates the terminal management table so that the "operation status" corresponds to each of the terminal IDs, "Olaa" and "01ba", is "Online (Busy)", based on the terminal ID "Olaa" of the source terminal and the terminal ID "Olba" of the destination terminal, which are included in the start request information. In the state described above, although not being participating in a session, each of the electronic whiteboard 1a, which is the source terminal, and the electronic whiteboard 1b, which is the destination terminal, are managed as being a status of communicating (a call status or a busy status) (step S33). In addition, in the state described above, the source terminal (electronic whiteboard 1a) and the destination terminal (electronic whiteboard 1b) have not started a videoconference but are in a call status (busy status), and when a third electronic whiteboard (for example, a terminal that participates in the middle of the videoconference) attempts to make a call with the source terminal (electronic whiteboard 1a) or the destination terminal (electronic whiteboard 1b), a notification sound or display indicating the call status (busy status) is output.

Next, a description is given of processing of executing a session for selecting the relay device 3 to be actually used. First, the session management unit 55 of the communication management device 5 generates a session ID for identifying a session established between the electronic whiteboard 1a and the electronic whiteboard 1b (step S34). In the description of the present embodiment, the session ID "se01" is generated.

In step S35, the session management unit 55 stores the session ID "se01" generated in step S34, the terminal ID "Olaa" of the source terminal (electronic whiteboard 1a), and the terminal ID "Olba" of the destination terminal (electronic whiteboard 1b) in association with each other in the session management table (see FIG. 9B).

Next, in step 36, the relay device management unit 56 selects the relay device 3 that relays the session between the source terminal (electronic whiteboard 1a) and the destination terminal (electronic whiteboard 1b). For example, the relay device management unit 56 selects, among the relay device IDs corresponding to the relay devices 3 whose operation statuses are "Online" in the relay device management table (see FIG. 9C), the relay device ID corresponding to the relay device 3 whose IP address is close to the IP address of the source terminal (electronic whiteboard 1a) in the terminal management table (FIG. 8B). In the description of the present embodiment given below, the relay device 3 identified by the relay device ID "111a" is selected.

In step S37-1, when the selection of the relay device performed in step S36 is completed, the communication unit 51 of the communication management device 5 transmits relay device selection information to the source terminal (electronic whiteboard 1a). The relay device selection information includes the IP address of the relay device 3 selected in step S36 and the session ID "se01" generated in step S34. Thereby, the source terminal (electronic whiteboard 1a) acquires the IP address of the communication management device 5, which is a transmission source of the relay device selection information.

In step S37-2, the communication unit 51 of the communication management device 5 transmits the relay device selection information to the destination terminal (electronic whiteboard 1b). The relay device selection information includes the IP address of the relay device 3 selected in step S36, the terminal ID "Olaa" of the source terminal (electronic whiteboard 1a), and the session ID "se01" generated in step S34. Thereby, the destination terminal (electronic whiteboard 1b) acquires the IP address of the communication management device 5, which is the transmission source of the relay device selection information, in execution of the session with the session ID "se01".

In step S38-1, the communication unit 11a of the source terminal (electronic whiteboard 1a) transmits reception completion information indicating that the relay device selection information is received in step S37-1 to the communication management device 5. The reception completion information includes the session ID received in step S37-1. Thereby, the communication management device 5 obtains information indicating that the transmission of the relay device selection information, executed with the specific session ID "se01" has been completed.

Similarly, in step S38-2, the destination terminal (electronic whiteboard 1b) also transmits reception completion information indicating that the relay device selection information has been received in step S37-2 to the communication management device 5. Thereby, the communication management device 5 obtains information indicating that the transmission of the relay device selection information, executed with the specific session ID "se01" has been completed.

Thus, the electronic whiteboard 1a and the electronic whiteboard 1b perform a videoconference by exchanging site image data and audio data via the relay device 3 selected in step S36.

### Process of Sharing Screen between Electronic Whiteboards

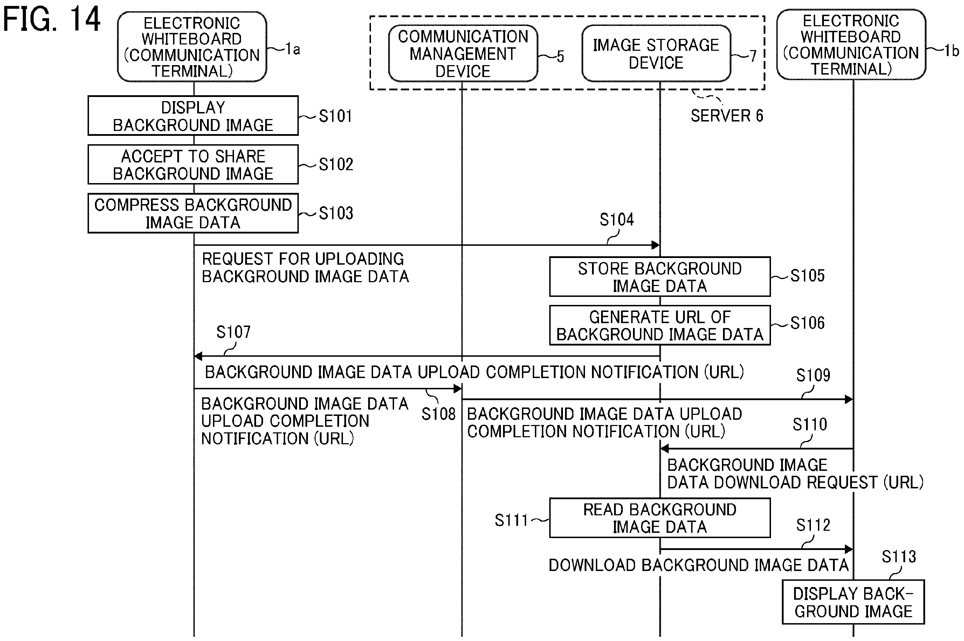

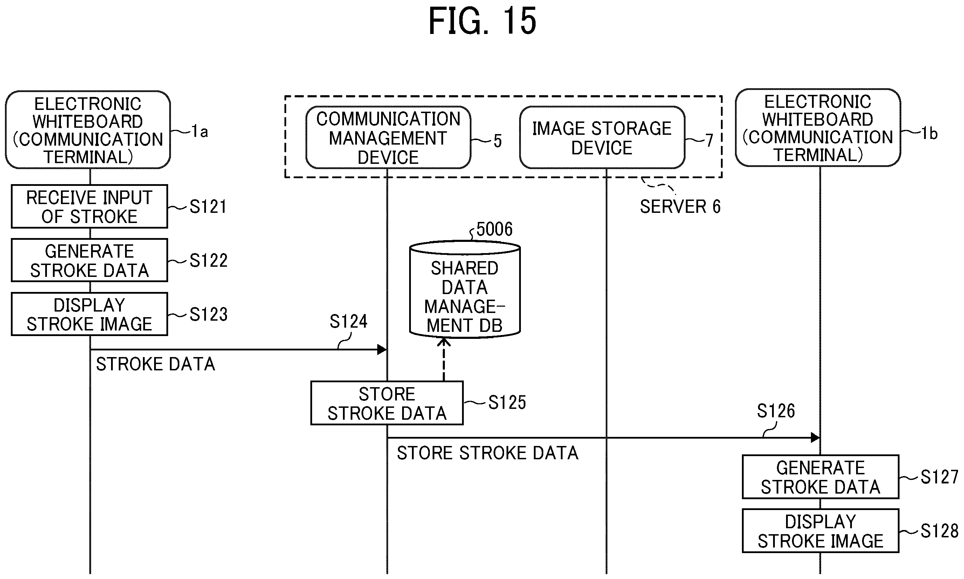

A description is now given of a process of sharing a screen between a plurality of electronic whiteboards 1 according to an embodiment, with reference to FIG. 14 to FIG. 16. FIG. 14 and FIG. 15 are sequence diagrams respectively illustrating a process of sharing background image data and a process of sharing stroke data, between the plurality of electronic whiteboards 1, according to an embodiment. In the description of the present embodiment given below, the electronic whiteboard 1a and the electronic whiteboard 1b share the background image data and the stroke data, and a background image and a stroke image originally displayed on the electronic whiteboard 1a are also displayed on the electronic whiteboard 1b. In the description of the embodiment, the electronic whiteboard 1a and the electronic whiteboard 1b may be referred to as the first electronic whiteboard (first communication terminal) and the second electronic whiteboard (second communication terminal, respectively. In addition, when a background image and a stroke image originally displayed on the electronic whiteboard 1b are also displayed on the electronic whiteboard 1a, a process that is substantially the same as the process described below is performed.

In step S101, the display control unit 14a of the electronic whiteboard 1a at the site A displays a background image on the display 180. Specifically, the data input unit 22a of the electronic whiteboard 1a receives an input of image data from an external device such as the PC 170. Then, the display control unit 14a causes the display 180 to display the background image associated with background image data, which is the image data input by the data input unit 22a.

In step S102, when the user A1 of the electronic whiteboard 1a performs a certain input operation, the reception unit 12a accepts to share a background image. Then, in step S103, the image processing unit 16a compresses the background image data associated with the background image being displayed on the display 180 of the electronic whiteboard 1a. Screen sharing among a plurality of electronic whiteboards 1 requires real-time processing, however transmitting or receiving image data having a large data size takes time to complete the data sharing. To deal with this, the electronic whiteboard 1a compresses the data to be transmitted to reduce the data size, before transmitting the data to the electronic whiteboard 1b, which is a counterpart communication terminal.

In step S104, the communication unit 11a of the electronic whiteboard 1a transmits, to the image storage device 7, a request for uploading the background image data. Hereinafter, the request may be referred to as an upload request. The upload request includes the background image data compressed by the image processing unit 16a. In the present embodiment, the communication unit 11a transmits the request for uploading the background image data with respect to a predetermined upload URL (for example, "http://xxx.jp/upload"), for example. Thereby, the communication unit 71 of the image storage device 7 receives the upload request. The data compressed may be referred to as compressed data.

Subsequently, in step S105, the storing/reading unit 79 of the image storage device 7 stores the background image data received in step S103 in the storage unit 7000. Further, in step S106, the generation unit 73 generates a URL indicating a storage location of the background image data stored in step S105. The URL is an example of storage location information, and the storage location information may also include a Uniform Resource Identifier (URI). Then, in step S107, the communication unit 71 transmits to the electronic whiteboard 1a an upload completion notification indicating that the upload of the background image data has been completed. The upload completion notification includes the URL generated in step S106. Thereby, the communication unit 11a of the electronic whiteboard 1a receives the upload completion notification transmitted from the image storage device 7.

In step S108, the communication unit 11a of the electronic whiteboard 1a transmits to the communication management device 5 a completion notification indicating that the upload of the image data of the background image is completed. The completion notification includes the URL of the image data received in step S107. Thereby, the communication unit 51 of the communication management device 5 receives the completion notification. Then, in step S109, the communication unit 51 transfers the completion notification including the URL to the electronic whiteboard 1b, which is a counterpart communication terminal. Thereby, the communication unit 11b of the electronic whiteboard 1b receives the completion notification.

In step S110, the communication unit 11b of the electronic whiteboard 1b transmits request information indicating a request for downloading the background image data (background image data download request) with respect to the URL, which is associated with the image storage device 7, received in step S109. Thereby, the communication unit 71 of the image storage device 7 receives the request information.

In step S111, the storing/reading unit 79 of the image storage device 7 reads the background image data, which is a request target, from the storage unit 7000 based on the URL In step S112, the communication unit 71 transmits the background image data, which is the request target, to the electronic whiteboard 1b, which is a request source terminal. Thereby, the communication unit 11b of the electronic whiteboard 1b downloads (receives) the background image data. Then, in step S113, the display control unit 14b of the electronic whiteboard 1b causes the display 180 to display the background image associated with the downloaded (received) background image data.

A description is now given of a process of sharing stroke data generated by the electronic whiteboard 1a with the electronic whiteboard 1b, with reference to FIG. 15. In step S121, at the site A, the user A1 moves the electronic pen 190 or the hand H in contact with the display 180 of the electronic whiteboard 1a, and the reception unit 12a receives an input of a stroke movement (trajectory). In step S122, the image processing unit 16a generates stroke data (for example, coordinate data (x, y)) for displaying a stroke image on the display 180, which is a two-dimensional display, based on the input stroke. Then, in step S123, the display control unit 14a causes the display 180 of the electronic whiteboard 1a to display the stroke image.

In step S124, the communication unit 11a transmits, to the communication management device 5, the stroke data generated in step S122. Thereby, the communication unit 51 of the communication management device 5 receives the stroke data transmitted from the electronic whiteboard 1a. Then, in step S125, the storing/reading unit 59 of the communication management device 5 stores the stroke data received in step S124 in the shared data management DB 5006 (see FIG. 10). In the example, the storing/reading unit 59 stores, in the shared data management table, items of the stroke data received by the communication unit 51 in the order of occurrence (sequence order) in association with the session ID with which the remote conference is conducted, as illustrated in FIG. 10.

In step S126, the communication unit 51 transfers the stroke data to the electronic whiteboard 1b, which is the counterpart communication terminal. Thereby, the communication unit 11b of the electronic whiteboard 1b receives the stroke data transmitted from the communication management device 5. In step S127, the image processing unit 16b of the electronic whiteboard 1b generates a stroke image based on the stroke data received in step S126. Then, in step S128, the display control unit 14b causes the display 180 of the electronic whiteboard 1b to display the stroke image generated in step S127. Accordingly, in the communication system according to the present embodiment, the stroke image drawn on the electronic whiteboard 1a is shared with the electronic whiteboard 1b.

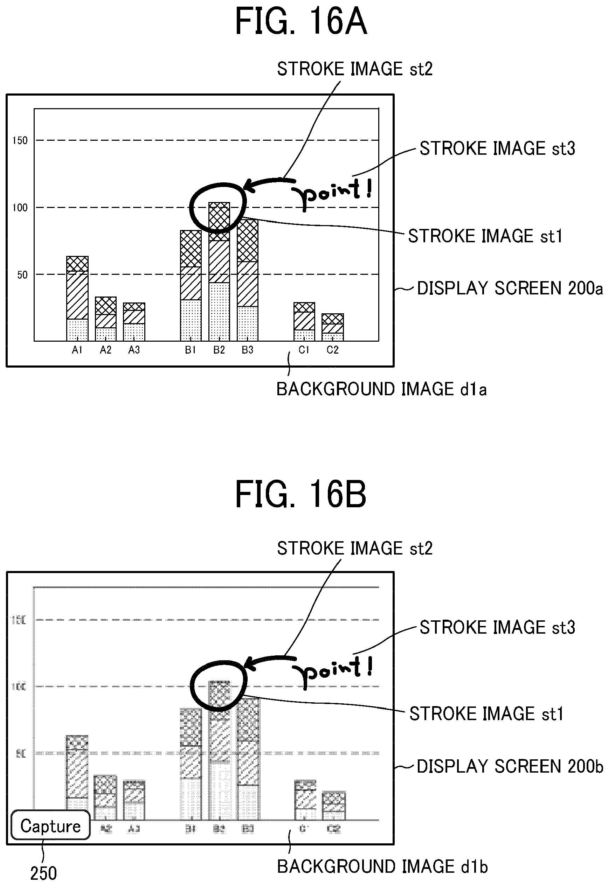

A description is now given of an example of screens that are displayed on the electronic whiteboard 1a and the electronic whiteboard 1b and that are displayed based on the background image data and the stroke data, which are shared by the processes illustrated in FIG. 14 and FIG. 15, with reference to FIG. 16A and FIG. 16B. FIG. 16A is a diagram illustrating a display screen displayed on the electronic whiteboard (first electronic whiteboard) 1a, according to an embodiment. FIG. 16B is a diagram illustrating a display screen displayed on the electronic whiteboard (second electronic whiteboard) 1b, according to an embodiment.

As illustrated in FIG. 16A, the electronic whiteboard 1a displays a display screen 200a that includes a background image dla, which is input from the external device in step S101 and is displayed on the display 180 of the electronic whiteboard 1a, and stroke images st1 to st3, which are displayed in step S123. On the other hand, as illustrated in FIG. 16B, the electronic whiteboard 1b displays a display screen 200b that includes a background image dlb, which is associated with the background image data compressed and transmitted by the electronic whiteboard 1a, and the stroke images st1 to st3, which are displayed in step S128. Further, the display screen 200b includes a "Capture" button 250 that is to be pressed to start capturing, which is described later.

As illustrated in FIGS. 16A and 16B, the image quality of the background image dla displayed on the electronic whiteboard 1a is different from that of the background image d1b displayed on the electronic whiteboard 1b. Because being represented by data that is directly input from the external device, the background image dla displayed on the electronic whiteboard 1a is a high-quality image. That is, the data is not compressed or has a low compression rate. On the other hand, compared with the background image dla displayed on the electronic whiteboard 1a, the background image d1b displayed on the electronic whiteboard 1b is a low-quality image, because the data representing the background image d1b is compressed with a high compression rate by the electronic whiteboard 1a.

### Process of Generating New Page

### Process of Acquiring Capture Image

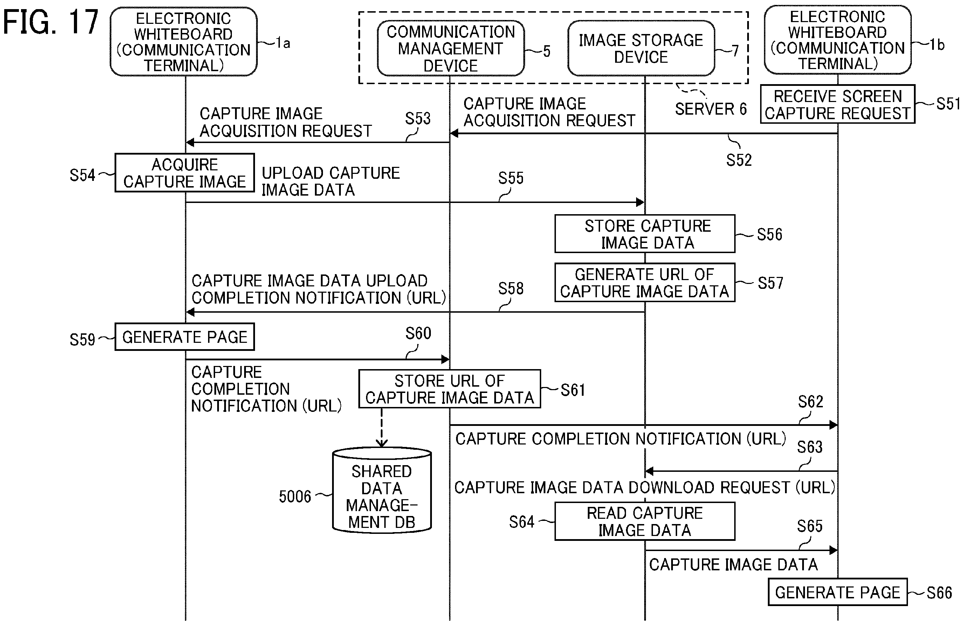

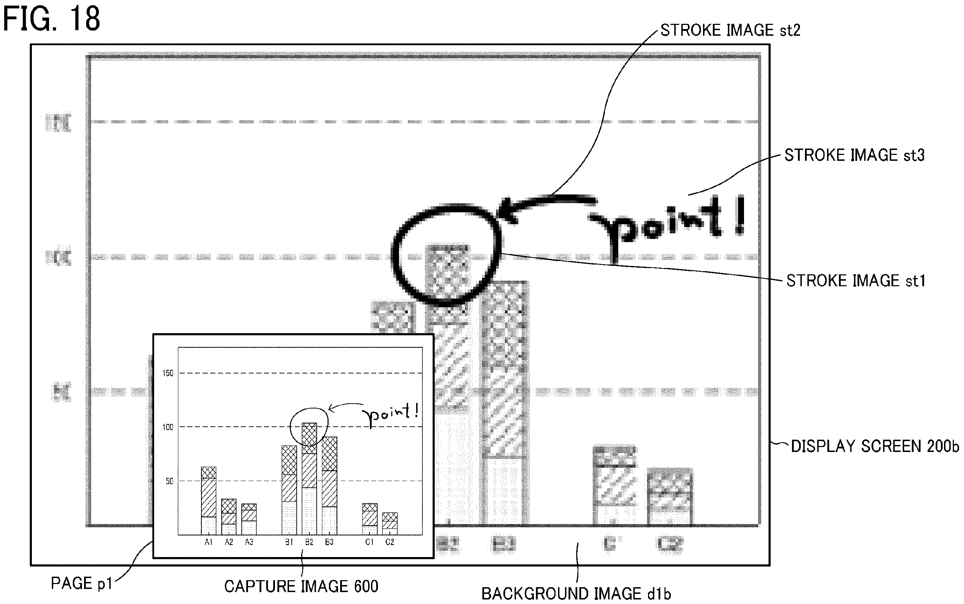

A description is now given of a process of generating a new page that includes a capture image of a display screen, which is shared between a plurality of electronic whiteboards 1, according to an embodiment, with reference to FIG. 17 to FIG. 24. First, a process of acquiring a capture image of the background image data input to the electronic whiteboard 1a is described with reference to FIG. 17 and FIG. 18. FIG. 17 is a sequence diagram illustrating an example of a process of acquiring a capture image in the communication system according to the present embodiment.

In step S51, at the site B, when the user B1 or the user B2 presses the "Capture" button 250 illustrated in FIG. 16B, the reception unit 12b receives a screen capture request requesting for capturing of the display screen 200b displayed on the electronic whiteboard 1b. Then, in step S52, the communication unit 11b transmits, to the communication management device 5, a capture image acquisition request indicating a request for acquisition of a capture image of the background image. Thereby, the communication unit 51 of the communication management device 5 receives the capture image acquisition request transmitted from the electronic whiteboard 1b.

Subsequently, in step S53, the communication unit 51 of the communication management device 5 transfers (transmits) the capture image acquisition request transmitted from the electronic whiteboard 1b to the electronic whiteboard 1a, which is a counterpart communication terminal for the electronic whiteboard 1b. Thereby, the communication unit 11a of the electronic whiteboard 1a receives the capture image acquisition request transferred (transmitted) from the communication management device 5.

Subsequently, in step S54, the capture image acquisition unit 17a of the electronic whiteboard 1a acquires a capture image of the background image dla by capturing the background image dla (see FIG. 16A) displayed on the display 180 of the electronic whiteboard 1a. As illustrated in FIG. 16A, the background image dla displayed on the electronic whiteboard 1a is represented by the image data that is input the electronic whiteboard 1a from the external device and that is not compressed by the electronic whiteboard 1a.

In step S55, the communication unit 11a uploads (transmits) the capture image data acquired in step S54 to the image storage device 7. Thereby, the communication unit 71 of the image storage device 7 receives the capture image data transmitted from the electronic whiteboard 1a.

In step S56, the storing/reading unit 79 of the image storage device 7 stores the capture image data received in step S55 in the storage unit 7000. Further, in step S57, the generation unit 73 generates a URL indicating a storage location of the capture image data stored in step S56. The URL is an example of storage location information, and the storage location information may also include a Uniform Resource Identifier (URI). Then, in step S58, the communication unit 71 transmits to the electronic whiteboard 1a an upload completion notification indicating that the upload of the capture image data has been completed. The upload completion notification includes the URL generated in step S58. Thereby, the communication unit 11a of the electronic whiteboard 1a receives the upload completion notification transmitted from the image storage device 7.

Subsequently, in step S59, the shared data generation unit 18a of the electronic whiteboard 1a generates a new page when the completion notice is received. In the description of the embodiment, as illustrated in FIG. 7, the page generated by the shared data generation unit 18a includes a page ID for identifying the generated page, information (parent) for identifying a conference conducted by the electronic whiteboard 1a, a gid, and the URL of the capture image data received in S58. The gid is assigned by the shared data management unit 57 of the communication management device 5 and is notified from the communication management device 5 to the electronic whiteboard 1a. Then, in step S60, the communication unit 11a transmits a capture completion notification indicating that the capturing has been completed. This capture completion notification includes the URL of the capture image data received in step S58 and the page ID of the page, which is newly added. Thereby, the communication unit 51 of the communication management device 5 receives the capture completion notification transmitted from the electronic whiteboard 1a.

Subsequently, in step S61, the storing/reading unit 59 of the communication management device 5 stores the URL of the capture image data received in step S60 in the shared data management DB 5006 (see FIG. 10). In the present embodiment, the storing/reading unit 59 stores the URL of the capture image data received by the communication unit 51 in association with the page ID received in step S60, as illustrated in FIG. 10. In addition, the shared data management unit 57 assigns a gid corresponding to the page to be stored in the shared data management table.

In step S62, the communication unit 51 of the communication management device 5 transmits the capture completion notification transmitted from the electronic whiteboard 1a to the electronic whiteboard 1b, which is a source of the capture image acquisition request. This capture completion notification includes the URL of the capture image data received in step S60, the page ID, and the gid assigned in step S61. Thereby, the communication unit 11b of the electronic whiteboard 1b receives the capture completion notification transmitted from the communication management device 5.

In step S63, the communication unit 11b of the electronic whiteboard 1b transmits request information indicating a request for downloading of the capture image data with respect to the URL related to the image storage device 7 received in step S62. Hereinafter, the request may be referred to as a capture image data download request. Thereby, the communication unit 71 of the image storage device 7 receives the request information.

In step S64, the storing/reading unit 79 of the image storage device 7 reads the capture image data, which is a request target, from the storage unit 7000 based on the URL In step S65, the communication unit 71 transmits the requested capture image data to the electronic whiteboard 1b, which is a source of the capture image data download request. Thereby, the communication unit 11b of the electronic whiteboard 1b downloads (receives) the capture image data.

Then, in step S66, the shared data generation unit 18b of the electronic whiteboard 1b generates a new page including the received capture image data. In the description of the embodiment, as illustrated in FIG. 7, the page generated by the shared data generation unit 18b includes the page ID, the gid, and the URL of the capture image data, which are received in step S62, in addition to the information (parent) for identifying a conference conducted by the electronic whiteboard 1b.

A description is now given of a display screen of the electronic whiteboard 1b when a new page is shared by the process illustrated in FIG. 17, with reference to FIG. 18. FIG. 18 is a diagram illustrating an example of a page that is shared between the electronic whiteboards 1 according to the present embodiments. In the display screen 200b illustrated in FIG. 18 includes, in addition to the background image d1b and the stroke images st1 to st3 illustrated in FIG. 16B, a capture image 600 corresponding to a new page p1 generated by the shared data generation unit 18b. The capture image 600 is an image acquired by capturing the background image dla being displayed on the electronic whiteboard 1a, and thereby having a higher image quality as compared with the background image d1b. As described above, when receiving a screen capture request from the user B1 or B2, the electronic whiteboard 1b generates a new page to be shared with the electronic whiteboard 1a by acquiring the capture image of the background image dla, which is displayed on the electronic whiteboard 1a and has a high image quality as compared with the background image d1b displayed on the electronic whiteboard 1b. Also, the shared data generation unit 18b generates a new page (shared data) to be shared with the electronic whiteboard 1a, as illustrated in FIG. 7, each time when the communication unit 11b receives the capture image data corresponding to the screen capture request from the user.

### Process of Selecting Whether to Capture Image

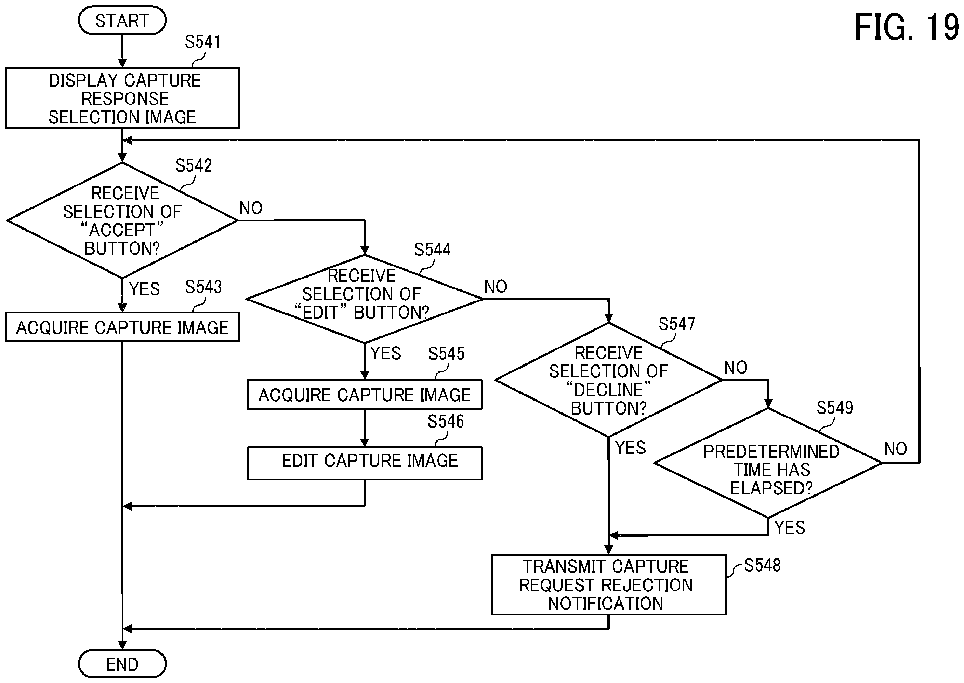

A description is now given of a process of selecting whether to accept to capture a background image in one of the electronic whiteboards 1 that has received a capture image acquisition request from the other one of the electronic whiteboards 1, which is a counterpart communication terminal, according to an embodiment, with reference to FIG. 19 to FIG. 21. FIG. 19 is a flowchart illustrating a process of selecting whether to capture an image performed by the electronic whiteboard 1, according to the present embodiment. The process according to the present embodiment illustrated in FIG. 19 is a process performed by the electronic whiteboard (first electronic whiteboard) 1a that has received a capture image acquisition request transmitted from the electronic whiteboard (second electronic whiteboard) 1b.

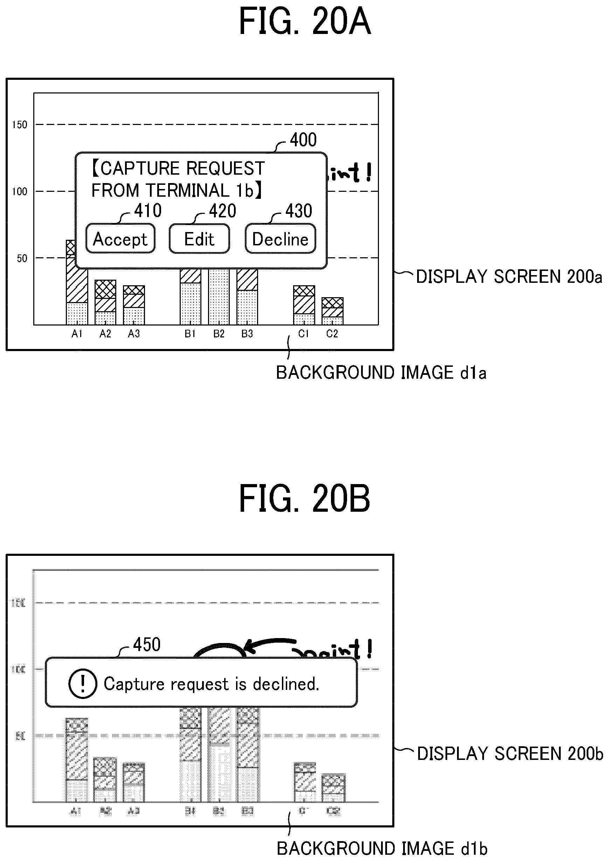

First, in step S541, when the electronic whiteboard 1a receives a capture image acquisition request transmitted from the electronic whiteboard 1b, which is a counterpart communication terminal, the display control unit 14a of the electronic whiteboard 1a causes the display 180 to display a capture response selection image 400 for allowing the user to select whether to acquire a capture image. FIG. 20A is a diagram illustrating an example of the capture response selection image 400 displayed on the electronic whiteboard 1a, according to the present embodiment. The capture response selection image 400 illustrated in FIG. 20A is, for example, a display image that allows the user A1 at the site A to select whether to acquire a capture image of the background image (for example, the background image dla) displayed on the display 180 of the electronic whiteboard 1a. The capture response selection image 400 includes an "Accept" button 410 that is pressed to permit acquisition of a capture image, an "Edit" button 420 that is pressed to edit an acquired capture image, and a "Decline" button 430 that is pressed to reject acquisition of a capture image.

When the reception unit 12a receives a selection of the "Accept" button 410 (YES in step S542), the process proceeds to step S543. Then, in step S543, the capture image acquisition unit 17a acquires the capture image of the background image dla being displayed on the electronic whiteboard 1a.

On the other hand, in step S542, when the reception unit 12a of the electronic whiteboard 1a does not receive the selection of the "Accept" button 410 (NO in step S542), the process proceeds to step S544. Subsequently, when the reception unit 12a receives a selection of the "Edit" button 420 (YES in step S544), the process proceeds to step S545. Then, in step S545, the capture image acquisition unit 17a acquires the capture image of the background image dla being displayed on the electronic whiteboard 1a. Note that each processing of step S543 and step S545 is substantially the same as the processing of step S54 illustrated in FIG. 17, and thus the description thereof is omitted. Then, in step S546, the image processing unit 16a performs processing of editing the capture image acquired in step S545. In the processing of editing a capture image, the capture image is edited according to input operations, related to the capture image, performed by the user Al, before being shared with the electronic whiteboard 1b.

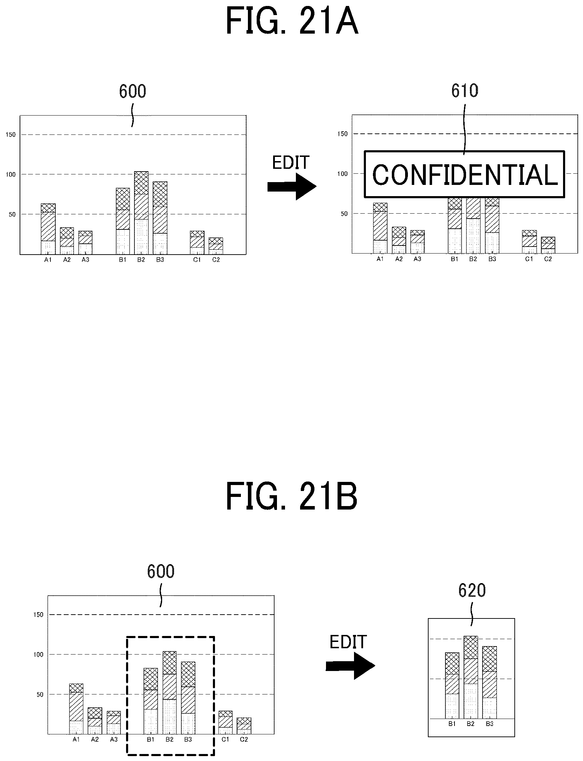

FIG. 21A and FIG. 21B are diagrams illustrating examples of capture images for explaining processing of editing a capture image performed by the electronic whiteboard 1a, according to the present embodiment. FIG. 21A is an example where an image 610, which is an example of a predetermined image, is superimposed on the capture image 600, which is acquired in step 545. The image processing unit 16a superimpose the image 610 on the background image displayed on the display 180 with respect to coordinates selected by the user A1, for example. The image 610 is, for example, an image including words (characters) indicating that the content of the captured background image is a confidential document. The image 610 is not limited to the example described above. The image 610 may be an image that includes a character (words), a figure, or a symbol, which is input by handwriting input with the electronic pen 190. Alternatively, the image 610 may be an image set in advance. Alternatively, the image 610 may be a black-painted image for masking arbitrary coordinates on the background image.

FIG. 21B is an example where an area 620, which is a part of the capture image 600 and an example of a predetermined area, is cut out from the capture image 600 acquired in step S545. In the example of FIG. 21B described above, the image processing unit 16a performs, for example, processing of cutting out a coordinate range selected by the user A1 from the background image, which is displayed on the display 180.

As described above, the image processing unit 16a performs predetermined processing on, or edit, the acquired capture image. When the image processing unit 16a performs the processing of editing, the communication unit 11a of the electronic whiteboard 1a transmits the capture image data representing the edited image to the electronic whiteboard 1b, which is a request source.

Returning to FIG. 19, in step S544, when the reception unit 12a of the electronic whiteboard 1a does not receive the selection of the "Edit" button 420 (NO in step S544), the process proceeds to step S547. Subsequently, when the reception unit 12a receives a selection of the "Decline" button 430 (YES in step S547), the process proceeds to step S548. On the other hand, when the reception unit 12a of the electronic whiteboard 1a does not receive the selection of the "Decline" button 430 (NO in step S547), the process proceeds to step S549. In step S549, when the determination unit 15a determines that a predetermined time, which may be set by a designer in advance, has elapsed since the capture image acquisition request is received, the process proceeds to step S548. On the other hand, the determination unit 15a repeats the processing from step S542 until the predetermined time has elapsed since the capture image acquisition request is received (NO in step S549).

In addition, in step S548, the communication unit 11a transmits a capture request rejection notification, which indicates that the acquisition of the capture image is rejected, to the electronic whiteboard 1b, which is a transmission source of the capture image acquisition request. Further, the electronic whiteboard 1b, which has received the capture request rejection notification, causes the display 180 to display a capture request rejection notification image 450 as illustrated in FIG. 20B This allows the user of the electronic whiteboard 1b who has issued the screen capture request to recognize that the request is rejected by the other user of the counterpart communication terminal.

As described above, when the capture image acquisition request transmitted from the electronic whiteboard 1b is received, the electronic whiteboard 1a displays the capture response selection image 400 to allow the user A1 of the electronic whiteboard 1a to reject the capture request for an image that is not appropriate for sharing with other users, such as a confidential document. In addition, the electronic whiteboard 1a may perform predetermined processing on (edit) an acquired capture image. This allows the user A1 of the electronic whiteboard 1a to limit the content to be shared with other users or to add information to the capture image to be shared.

### Another Example of Process of Acquiring Capture Image

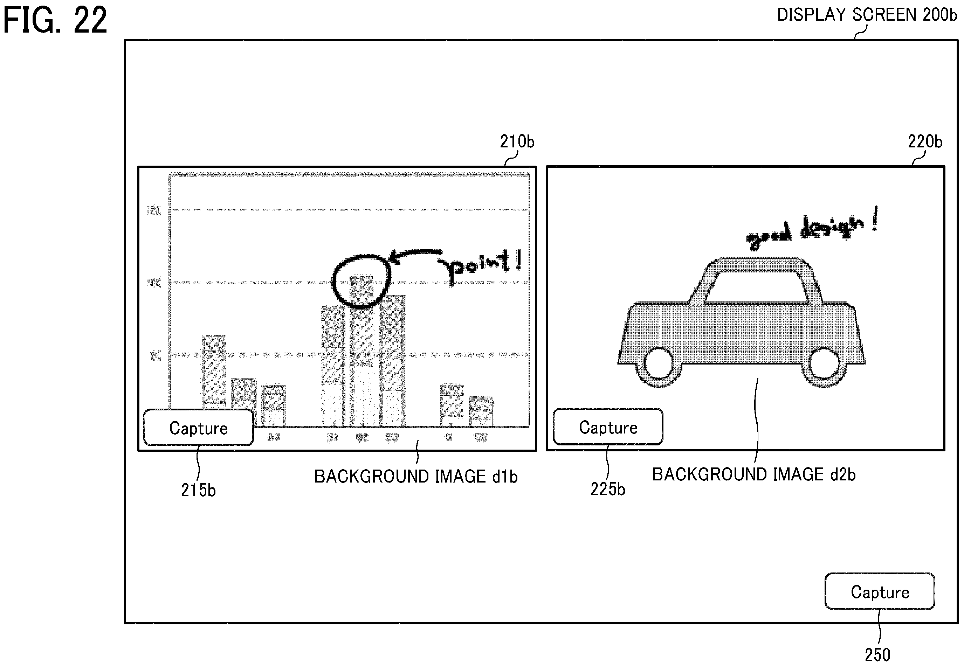

A description is now given of another example of the process of acquiring a capture image, with reference to FIG. 22 to FIG. 24. First, a description is given of an example in which a display screen displayed based on screen data input to each of two electronic whiteboards 1 (for example, the electronic whiteboard 1a and the electronic whiteboard 1c) is shared with the electronic whiteboard 1b, with reference to FIG. 22. FIG. 22 is a diagram illustrating an example of a display screen displayed on the electronic whiteboard 1b when a background image is shared between the plurality of electronic whiteboards 1 according to the present embodiment.

The display screen 200b illustrated in FIG. 22 includes a display area 210b including the background image d1b according to the background image data transmitted from the electronic whiteboard 1a, a display area 220b including a background image d2b according to background image data transmitted from the electronic whiteboard 1c, and the "Capture" button 250 to be pressed to start capturing a background image being displayed on the display screen 200b. In addition, the display area 210b includes a "Capture" button 215b, which is pressed to start capturing the background image dlb, and the display area 220b includes a "Capture" button 225b, which is pressed to start capturing the background image d2b.

In the example of FIG. 22 described above, when the reception unit 12b receives a selection of the "Capture" button 215b, the electronic whiteboard 1b transmits a capture image acquisition request to the electronic whiteboard 1a that has transmitted the background image data related to the background image d1b. In addition, when the reception unit 12b receives a selection of the "Capture" button 225b, the electronic whiteboard 1b transmits a capture image acquisition request to the electronic whiteboard 1c that has transmitted the background image data related to the background image d2b. On the other hand, when the reception unit 12b receives a selection of the "Capture" button 250, the electronic whiteboard 1b transmits to each of the electronic whiteboard 1a and the electronic whiteboard 1c a capture image acquisition request with respect to one of the background images displayed on the display screen 200b. Processing after transmitting the capture image acquisition request is substantially the same as the processing of step S52 and the subsequent steps in the sequence diagram illustrated in FIG. 17, and the description of the processing after S89 is omitted.

As described above, when the screen data of the plurality of electronic whiteboards 1 is shared, the electronic whiteboard 1b may transmit a capture image acquisition request to each of the plurality of electronic whiteboards 1a and 1c or transmit a capture image acquisition request with respect any image data instead of the whole display screen.

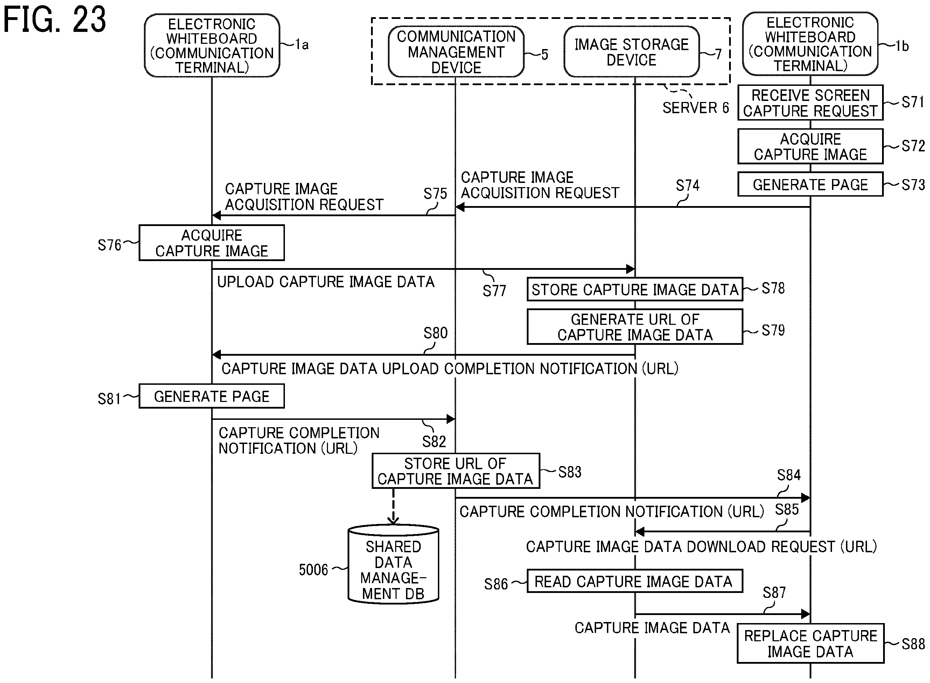

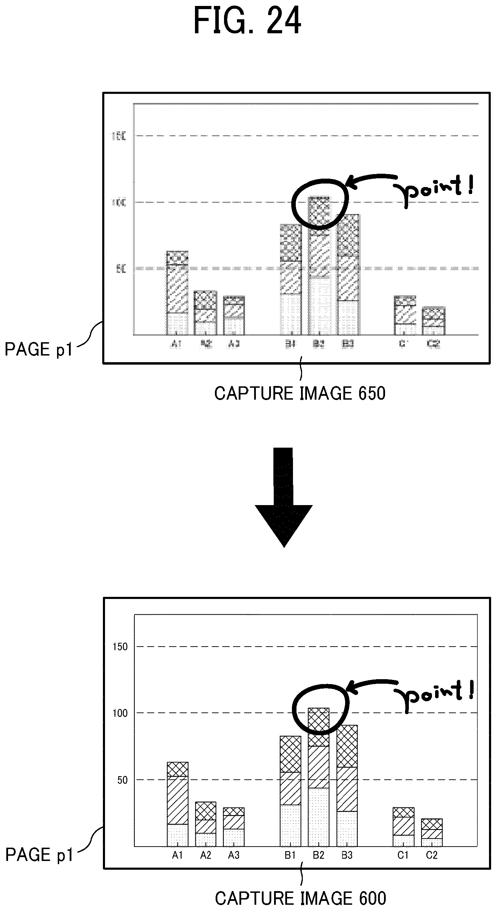

A description is now given of a process of switching capture images in a step-by-step manner, on the electronic whiteboard 1 that has received a screen capture request from a user, for proceeding the conference smoothly, with reference to FIG. 23 and FIG. 24. FIG. 23 is a sequence diagram illustrating another example of a process of acquiring a capture image in the communication system according to one of the embodiments.

In step S71, at the site B, when the user B 1 or the user B2 presses the "Capture" button 250 illustrated in FIG. 16B, the reception unit 12b receives a screen capture request requesting for capturing the display screen 200b being displayed on the electronic whiteboard 1b. Then, in step S72, the capture image acquisition unit 17b acquires a capture image of the background image d1b by capturing the background image d1b (see FIG. 16B) displayed on the display 180 of the electronic whiteboard 1b. As illustrated in FIG. 16B, the background image d1b displayed on the electronic whiteboard 1b is represented by the image data that has been compressed by the electronic whiteboard 1a.

Subsequently, in step S73, the shared data generation unit 18b newly generates a page including the capture image data acquired by the capture image acquisition unit 17b. In the present embodiment, for example, the shared data generation unit 18b generates the page p1 including the capture image 650 of the background image d1b as illustrated in FIG. 24. In the description of the present embodiment, as illustrated in FIG. 7, the page generated by the shared data generation unit 18b includes a page ID for identifying the generated page, information (parent) for identifying a conference conducted by the electronic whiteboard 1b, a gid, and the capture image data associated with the capture image 650 received in S72. Accordingly, the electronic whiteboard 1b generates the page of the capture image data acquired by own terminal as a temporary new page, before receiving the capture image data acquired by the electronic whiteboard 1a that is a counterpart communication terminal.

The processing of steps S74 to S87 is substantially the same as or similar to the processing in steps S52 to S66 illustrated in FIG. 17, and thus the description thereof is omitted. In addition, the processing of steps S72 and S73 and the processing of step S74 and the subsequent steps may be performed in parallel. In step S87, the communication unit 11b of the electronic whiteboard 1b receives the capture image data acquired by the electronic whiteboard 1a via the communication management device 5.

Then, in step S88, the shared data generation unit 18b of the electronic whiteboard 1b replaces the capture image data included in the page generated in step S73 with the capture image data received in step S87. In the present embodiment, for example, the shared data generation unit 18b replaces the capture image 650 included in the page p1 with the capture image 600 of the background image dla acquired by and transmitted from the electronic whiteboard 1a, as illustrated in FIG. 24.

As described above, when receiving the screen capture request from the user B 1 or the user B2, the electronic whiteboard 1b acquires the capture image 650 of the background image dlb, which is displayed on the electronic whiteboard 1b, and then replaces the capture image 650 of the background image d1b with the capture image 600 associated with the capture image data transmitted from the electronic whiteboard 1a after the reception of the capture image data is completed. Accordingly, the electronic whiteboard 1b generates a new page without waiting for the transmission of the capture image data from the electronic whiteboard 1a, resulting in proceeding with the remote conference smoothly.

As described above, the electronic whiteboard 1b according to one of the embodiments of the disclosure is a communication terminal that is capable of sharing data with the electronic whiteboard 1a (an example of another communication terminal, or a counterpart communication terminal). The electronic whiteboard 1b causes the display 180 (an example of a display unit) of the electronic whiteboard 1b to display the background image d1b associated with background image data (an example of second image data) that is obtained by compressing background image data (an example of first image data) associated with the background image dla that is input to the electronic whiteboard 1a. That is, the background image d1b associated with background image data (an example of second image data) is compressed data of the background image data (an example of first image data) associated with the background image dla. The electronic whiteboard 1b transmits a capture image acquisition request with respect to the displayed background image d1b to the server 6 that manages the data to be shared with the electronic whiteboard 1a. Then, the electronic whiteboard 1b receives from the server 6 the capture image data of the background image dla (for example, the capture image data associated with the capture image 600) acquired by the electronic whiteboard 1a in response to the acquisition request. Thereby, the electronic whiteboard 1b improves the image quality of the capture image acquired with respect to the image data transmitted from the electronic whiteboard 1a.

In addition, when receiving the capture image data, the electronic whiteboard 1b (an example of the communication terminal) according to the one of the embodiments of the present disclosure shares the capture image data with the electronic whiteboard 1a (an example of the other communication terminal or the communication counterpart terminal), and generates shared data that includes the received capture image data. In addition, the electronic whiteboard 1b newly generates a page each time when the capture image data is received. As a result, the electronic whiteboard 1b acquires the capture image of the background image dla having a higher image quality as compared with the background image d1b displayed on the electronic whiteboard 1b and then generates a new page to be share with the electronic whiteboard 1a.

Furthermore, the electronic whiteboard 1b (an example of the communication terminal) according to the one of the embodiments of the present disclosure receives a capture request with respect to the displayed background image d1b. When receiving the capture request, the electronic whiteboard 1b acquires capture image data (for example, capture image data associated with the capture image 650) of the displayed background image d1b (an example of an image associated with second capture image data) and generates the shared data that includes the capture image data of the acquired background image d1b. In addition, when receiving the capture request, the electronic whiteboard 1b transmits a capture image acquisition request to the electronic whiteboard 1a (an example of the other communication terminal or the counterpart communication terminal), and then replaces the capture image data of the background image d1b with the capture image data (for example, the capture image data associated with the capture image 600) of the background image dla (an example of an image associated with the first image data) when the capture image data of the background image dla is received. Accordingly, the electronic whiteboard 1b generates a new page without waiting for transmission of the capture image data from the electronic whiteboard 1a, resulting in smoothly proceeding with the remote conference.

In addition, the electronic whiteboard 1b (an example of a communication terminal) according to one of the embodiments of the present disclosure displays, on the display 180 (an example of a display unit) of the electronic whiteboard 1b, a plurality of images (for example, the background image d1a and the background image d2b) associated with a plurality of background image data (an example of second image data) transmitted from the electronic whiteboard 1a and the electronic whiteboard 1c (an example of a plurality of counterpart communication terminals). The electronic whiteboard 1b transmits a capture image acquisition request to another communication terminal (the electronic whiteboard 1a or the electronic whiteboard 1c) that has transmitted background image data associated with an image that is a target of the capture image acquisition request. In addition, the electronic whiteboard 1b transmits a capture image acquisition request to the plurality of other communication terminals, or the plurality of counterpart communication terminals (electronic whiteboard 1a and electronic whiteboard 1c) that has transmitted the background image data associated with a corresponding one of the plurality of images displayed. Accordingly, when screen data of the electronic whiteboard 1a and screen data of the electronic whiteboard 1c are shared on the electronic whiteboard 1b, the electronic whiteboard 1b may transmits a capture image acquisition request to each of the electronic whiteboard 1a and the electronic whiteboard 1c. In addition, when the screen data of the electronic whiteboard 1a and the screen data of the electronic whiteboard 1c are shared on the electronic whiteboard 1b, the electronic whiteboard 1b may transmits a capture image acquisition request to one of the electronic whiteboard 1a and the electronic whiteboard 1c.

Further, a communication system according to one of the embodiments of the present disclosure includes the electronic whiteboard 1b (an example of a communication terminal) and the electronic whiteboard 1a (an example of another communication terminal, or a counterpart communication terminal) that shares data with the electronic whiteboard 1b. When the capture image acquisition request is received, the electronic whiteboard 1a displays, on the display (an example of a display unit) of the electronic whiteboard 1a, the capture response selection image 400 (an example of a selection image) capable of selecting whether to acquire a capture image. When acceptance of the acquisition of the capture image is selected, the electronic whiteboard 1a acquires capture image data of the background image dla (an example of an image associated with first image data). When rejection of the acquisition of the capture image is selected, the electronic whiteboard 1a transmits to the server 6 a rejection notification indicating the rejection is selected. Then, the electronic whiteboard 1b receives the rejection notification transmitted from the electronic whiteboard 1a. Thereby, the communication system according to the one of the embodiments of the present disclosure displays the capture response selection image 400 on the electronic whiteboard 1a that has received the capture image acquisition request, and thereby allowing the user A1 of the electronic whiteboard 1a to reject capturing of an image that is not appropriate for sharing with other users.

In addition, in the communication system according to one of the embodiments of the present disclosure, the electronic whiteboard 1a (an example of another communication terminal or counterpart communication terminal) acquires capture image data in which the image 610 (an example of a predetermined image) is superimposed on the background image dla (an example of an image associated with the first image data). The electronic whiteboard 1a further acquires an image of a predetermined range (for example, the area 620) included in the background image dla as the capture image data. Accordingly, the communication system according to one of the embodiments of the present disclosure may perform predetermined processing (edit) on the acquired capture image, and thereby allowing a user to limit the content to be shared with another user or to add predetermined information to the capture image.

### Supplementary Information on Embodiments

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), and field programmable gate array (FPGA), and conventional circuit components arranged to perform the recited functions.

Further, the various tables of the embodiment described above may be generated by the learning effect of machine learning. By classifying data of the associated items, the use of the tables is optional. In the present disclosure, machine learning is a technique that enables a computer to acquire human-like learning ability. Machine learning refers to a technology in which a computer autonomously generates an algorithm required for determination such as data identification from learning data loaded in advance and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

Although the communication terminal, the communication system, the method for sharing data, and the program according to embodiments of the present disclosure are described above. The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above. Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

The present disclosure may be implemented in any convenient form, for example using dedicated hardware, or a mixture of dedicated hardware and software. The present disclosure may be implemented as computer software implemented by one or more networked processing apparatuses. The processing apparatuses can comprise any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A communication terminal (1, 1b), comprising:
a communication unit (105, 11, 11b) configured to communicate with a counterpart communication terminal (1, 1a) to share data with the counterpart communication terminal (1, 1a), the counterpart communication terminal (1, 1a) being input with first image data;
a display unit (180, 14, 14b) configured to display, on a display (180), an image associated with second image data, the second image data being compressed data of the first image data;
a transmitting unit (105, 11, 11b) configured to transmit, to a server (6), a capture image acquisition request that is a request for a capture image corresponding to the image associated with the second image data and displayed by the display unit (180, 14, 14b), the server (6) managing shared data to be shared with the counterpart communication terminal (1, 1a); and
a receiving unit (105, 11, 11b) configured to receive, from the server (6), capture image data of an image associated with the first image data, the capture image data being acquired by the counterpart communication terminal (1, 1a) in response to the capture image acquisition request.

2. The communication terminal (1, 1b) according to claim 1,
wherein the receiving unit (105, 11, 11b) receives, from the counterpart communication terminal (1, 1a), the capture image data of the image associated with the first image data and displayed on the counterpart communication terminal (1, 1a).

3. The communication terminal (1, 1b) according to one of claim 1 and claim 2, further comprising a shared data generation unit (18, 18b, 101) configured to generate the shared data to be shared with the counterpart communication terminal (1, 1a) on receiving the capture image data, the shared data including the capture image data received.

4. The communication terminal (1, 1b) according to claim 3,
wherein the shared data includes a plurality of pages, and
wherein the shared data generation unit (18, 18b, 101) generates a new page each time when the capture image data is received.

5. The communication terminal (1, 1b) according to one of claim 3 and claim 4, further comprising:
a reception unit (114, 116, 101, 12, 12b) configured to receive a capture request that is a request for capturing the image associated with the second image data and displayed by the display unit (180, 14, 14b); and
an acquisition unit (17, 17b, 101) configured to acquire capture image data of the image associated with the second image data, which is being displayed by the display unit (180, 14, 14b), in response to the capture request, and
wherein the shared data generation unit (18, 18b, 101) generates the shared data including the capture image data of the image associated with the second image data, which is acquired by the acquisition unit (17, 17b, 101),
wherein, when the reception unit (114, 116, 101, 12, 12b) receives the capture request, the transmitting unit (105, 11, 11b) transmits the capture image acquisition request to the counterpart communication terminal (1, 1a), and
wherein, when the capture image data of the image associated with the first image data is received by the receiving unit (105, 11, 11b), the shared data generation unit (18, 18b, 101) replaces the capture image data of the image associated with the second image data with the capture image data of the image associated with the first image data.

6. The communication terminal (1, 1b) according to any one of claims 3 to 4,
wherein the shared data includes stroke data associated with a stroke image that is drawn on at least one of the communication terminal (1, 1b) or the counterpart communication terminal (1, 1a).

7. The communication terminal (1, 1b) according to any one of claims 1 to 6,
wherein the display unit (180, 14, 14b) causes the display (180) to display a plurality of images associated with a plurality of second image data transmitted from a plurality of counterpart communication terminals (1, 1a, 1c), and
wherein the transmitting unit (105, 11, 11b) transmits to one of the plurality of counterpart communication terminals (1, 1a, 1c) the capture image acquisition request, the one of the plurality of counterpart communication terminals (1, 1a, 1c) having transmitted one of the plurality of second image data associated with a corresponding one of the plurality of images, the corresponding one of the plurality of images being a target of the capture image acquisition request.

8. The communication terminal (1, 1b) according to claim 7,
wherein the transmitting unit (105, 11, 11b) transmits the capture image acquisition request to each of the plurality of counterpart communication terminals (1, 1a, 1c), each of the plurality of counterpart communication terminals (1, 1a, 1c) having transmitted the second image data associated with a corresponding one of the plurality of images displayed by the display unit (180, 14, 14b).

9. A communication system, comprising:
the communication terminal (1, 1b) according to any one of claims 1 to 8; and
a counterpart communication terminal (1, 1a),
the counterpart communication terminal (1, 1a) including
another acquisition unit (17, 17a, 101) configured to acquire capture image data of an image associated with the first image data and displayed on the counterpart communication terminal (1, 1a), the first image data being input to the counterpart communication terminal (1, 1a), and
another transmitting unit (105, 11, 11a) configured to transmit, to a server (6), the capture image data acquired by the another acquisition unit (17, 17a, 101).

10. The communication system according to claim 9,
wherein the counterpart communication terminal (1, 1a) further includes another display unit (180, 14, 14a) configured to cause the display (180) of the counterpart communication terminal (1, 1a) to display a selection image for selecting whether to perform acquisition of a capture image when the capture image acquisition request is received,
wherein, when acceptance of the acquisition of the capture image is selected, the another acquisition unit (17, 17a, 101) acquires the capture image data of the image associated with the first image data,
wherein, when rejection of the acquisition of the capture image is selected, the another transmitting unit (105, 11, 11a) transmits, to the server (6), a rejection notification indicating the rejection, and
wherein the receiving unit (105, 11, 11b) of the communication terminal (1, 1b) receives, from the server (6), the rejection notification.

11. The communication system according to one of claim 9 and claim 10,
wherein the another acquisition unit (17, 17a, 101) acquires, as the capture image data, the image associated with the first image data on which a predetermined image is superimposed.

12. The communication system according to any one of claims 9 to claim 11,
wherein the another acquisition unit (17, 17a, 101) acquires, as the capture image data, a predetermined range of the image associated with the first image data.

13. A method for sharing data, comprising:
communicating (S38-1) with a counterpart communication terminal (11, 11a) input with first image data;
displaying (S113), on a display (180), an image associated with second image data, the second image data being compressed data of the first image data;
transmitting (S52, S74), to a server (6), a capture image acquisition request that is a request for a capture image corresponding to the image associated with the second image data and displayed on the display (180), the server (6) managing shared data to be shared with the counterpart communication terminal (1, 1a); and
receiving (S65, S87), from the server (6), capture image data of an image associated with the first image data acquired by the counterpart communication terminal (1, 1a) in response to the capture image acquisition request.

14. A carrier means carrying a computer readable code for controlling a computer to carry out the method of claims 13.
